# EUROPEAN PATENT APPLICATION

(11) **EP 4 502 051 A1**
(43) Date of publication of application: **05.02.2025**
(21) Application number: 23780024.8
(22) Date of filing: 23.03.2023
(51) Int. Cl.: C08L 45/00, C08K 5/13

(54) **RECYCLED CYCLIC OLEFIN RESIN COMPOSITION, MOLDED BODY, OPTICAL COMPONENT, AND METHOD FOR MANUFACTURING RECYCLED CYCLIC OLEFIN RESIN COMPOSITION**

(30) Priority: 28.03.2022 JP 2022051883
(71) Applicant: Mitsui Chemicals, Inc., Tokyo 104-0028 (JP)
(72) Inventor: KIYA, Makoto, Sodegaura-shi, Chiba 299-0265 (JP); FUJIMURA, Futoshi, Sodegaura-shi, Chiba 299-0265 (JP); OKUNO, Takayuki, Sodegaura-shi, Chiba 299-0265 (JP); SOEDA, Yasuyuki, Singapore Science Park II, Singapore 117406 (SG)
(74) Representative: Hoffmann Eitle
(86) International application number: PCT/JP2023/011454
(87) International publication number: WO 2023/190013

(57) **Abstract**

A recycled cyclic olefin resin composition containing a collected cyclic olefin resin (A), in which a ratio (w₂/w₁) of a mass (w₂) of oxygen (O₂) contained in the recycled cyclic olefin resin composition to a total mass (w₁) of the recycled cyclic olefin resin composition is 100 ppm or less; [2] a molded body containing the recycled cyclic olefin resin composition according to [1]; [3] an optical component including the molded body according to [2]; [4] a method for producing a recycled cyclic olefin resin composition, the method including a step (1) of subjecting a collected cyclic olefin resin composition containing a collected cyclic olefin resin (A) to a heat treatment at a temperature of (Tg - 50°C) or higher and (Tg - 1°C) or lower in an inert atmosphere or under a reduced pressure, a glass transition temperature of the collected cyclic olefin resin (A) being denoted by Tg.

## Description

### TECHNICAL FIELD

The present invention relates to a recycled cyclic olefin resin composition, a molded body, an optical component, and a method for producing a recycled cyclic olefin resin composition.

### BACKGROUND ART

Among polyolefin resins, a cyclic olefin resin is particularly excellent in transparency. The cyclic olefin resin has low water absorbency and low moisture permeability and does not have a polar group, so that the cyclic olefin resin is difficult to adsorb chemicals containing polar groups. It has been disclosed that, by utilizing such properties, the cyclic olefin resin is used for, for example, transparent containers for food and medicine; optical lenses such as a spectacle lens, a pickup lens, a fθ lens, and a smartphone camera lens; and optical recording media such as MO, DVD, and CD (see, for example, Patent Document 1).

The molded body for such an application is molded by a molding machine such as an injection molding machine, and a large amount of processed waste materials such as a sprue or a runner is produced during the molding. Currently, most of these processed waste materials are incinerated. However, in incineration of plastics such as the cyclic olefin resin, a large amount of carbon dioxide is produced, which is an issue from the viewpoint of protecting the global environment.

In recent years, recycled plastics have been widely used, the recycled plastics being obtained by collecting waste materials of a molded body made of a thermoplastic resin, pulverizing the waste materials, and pelletizing the pulverized materials as necessary, (see, for example, Patent Document 2).

### RELATED DOCUMENT

### PATENT DOCUMENTS

[Patent Document 1] Japanese Unexamined Patent Publication No. 2015-199939
[Patent Document 2] Japanese Unexamined Patent Publication No. 2000-169621

### SUMMARY OF THE INVENTION

### TECHNICAL PROBLEM

However, in a case where the waste materials of the molded body containing a cyclic olefin resin are reused, the quality such as the transparency of the obtained molded body or optical component may be deteriorated, and the molded body or optical component thus may not be able to be used for the original use.

The present invention has been made in view of the above circumstances, and an object of the present invention is to provide a recycled cyclic olefin resin composition which enables obtaining a molded body and an optical component, with a decrease in transparency controlled, and a molded body and an optical component, with a decrease in transparency controlled.

### SOLUTION TO PROBLEM

The present inventors have conducted intensive studies to solve the above-described issue. As a result, the present inventors have found that the decrease in the transparency of the molded body and the optical component, which are formed by using the recycled cyclic olefin resin composition, is controlled by setting a content of oxygen (O₂) contained in the recycled cyclic olefin resin composition to be within a specific range and thus have completed the present invention.

According to the present invention, there are provided a recycled cyclic olefin resin composition, a molded body, an optical component, and a method for producing a recycled cyclic olefin resin composition, each of which is shown below.

[1] A recycled cyclic olefin resin composition containing a collected cyclic olefin resin (A), in which a ratio (w₂/w₁) of a mass (w₂) of oxygen (O₂) contained in the recycled cyclic olefin resin composition to a total mass (w₁) of the recycled cyclic olefin resin composition is 100 ppm or less.
[2] The recycled cyclic olefin resin composition according to [1], in which w₂/w₁ is 1 ppm or more.
[3] The recycled cyclic olefin resin composition according to [1] or [2], in which the collected cyclic olefin resin (A) contains a cyclic olefin copolymer (P1) that contains
   at least one olefin-derived repeating unit (a) represented by Formula (I) and
   at least one cyclic olefin monomer-derived repeating unit (b) selected from the group consisting of a repeating unit (AA) represented by Formula (II), a repeating unit (AB) represented by Formula (III), and a repeating unit (AC) represented by Formula (IV), 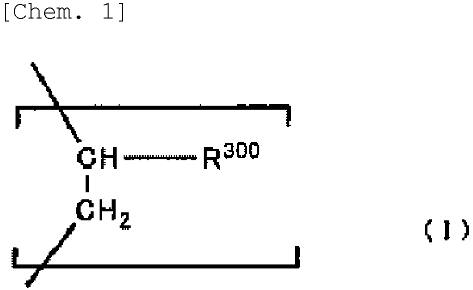 in Formula (I), R³⁰⁰ represents a hydrogen atom or a linear or branched hydrocarbon group having 1 to 29 carbon atoms; 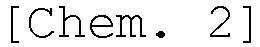 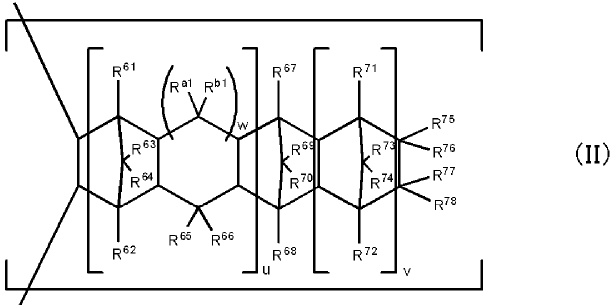 in Formula (II), u is 0 or 1, v is 0 or a positive integer, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring; 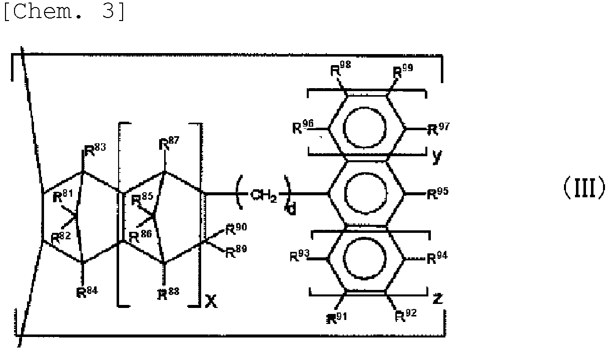 in Formula (III), x and d are each 0 or an integer of 1 or more, y and z are each 0, 1, or 2, R⁸¹ to R⁹⁹ may be the same as or different from each other and are each a hydrogen atom, a halogen atom, an aliphatic hydrocarbon group, which is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be directly bonded to each other or bonded to each other through an alkylene group having 1 to 3 carbon atoms, and in a case of y = z = 0, R⁹⁵ and R⁹² or R⁹⁵ and R⁹⁹ may be bonded to each other to form a monocyclic or polycyclic aromatic ring; 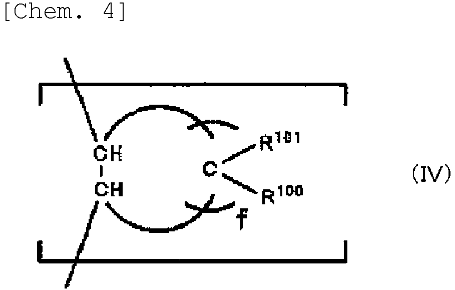 in Formula (IV), R¹⁰⁰ and R¹⁰¹ may be the same as or different from each other and are each a hydrogen atom or a hydrocarbon group having 1 to 5 carbon atoms, and f is an integer of 1 ≤ f ≤ 18.
[4] The recycled cyclic olefin resin composition according to [1] or [2], in which the collected cyclic olefin resin (A) contains a cyclic olefin copolymer (P2) that contains a repeating unit (AA) represented by Formula (II) and a constituent unit (C) derived from a cyclic olefin having an aromatic ring,
   the repeating unit (AA) contains no aromatic ring, and
   the cyclic olefin having an aromatic ring contains at least one selected from the group consisting of a compound represented by Formula (C-1), a compound represented by Formula (C-2), and a compound represented by Formula (C-3), 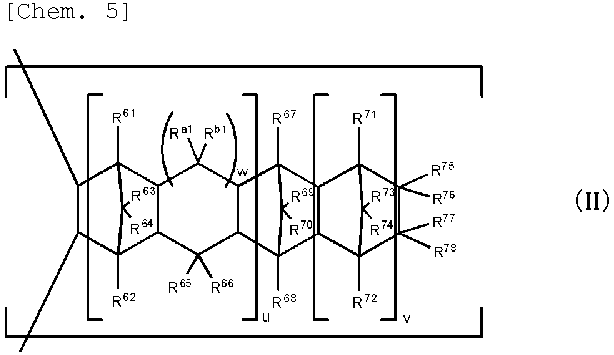 in Formula (II), u is 0 or 1, v is 0 or a positive integer, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, or a cycloalkyl group having 3 to 15 carbon atoms, and R⁷⁵ to R⁷⁸ may be bonded to each other to form a monocyclic ring or a polycyclic ring; 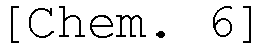 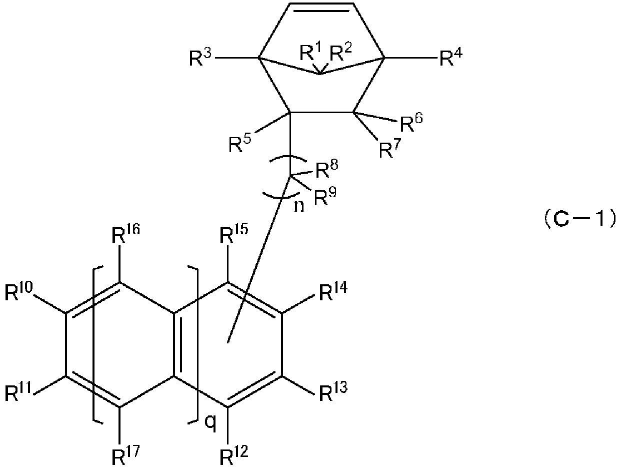 in Formula (C-1), n and q are each independently 0, 1, or 2, R¹ to R¹⁷ are each independently a hydrogen atom, a halogen atom other than a fluorine atom, or a hydrocarbon group having 1 to 20 carbon atoms, which may be substituted with a halogen atom other than a fluorine atom, one of R¹⁰ to R¹⁷ is a bonding site, in a case of q = 0, R¹⁰ and R¹¹, R¹¹ and R¹², R¹² and R¹³, R¹³ and R¹⁴, R¹⁴ and R¹⁵, or R¹⁵ and R¹⁰ may be bonded to each other to form a monocyclic ring or a polycyclic ring, in a case of q = 1 or 2, R¹⁰ and R¹¹, R¹¹ and R¹⁷, R¹⁷ and R¹⁷, R¹⁷ and R¹², R¹² and R¹³, R¹³ and R¹⁴, R¹⁴ and R¹⁵, R¹⁵ and R¹⁶, R¹⁶ and R¹⁶, or R¹⁶ and R¹⁰ may be bonded to each other to form a monocyclic ring or a polycyclic ring, the monocyclic ring or the polycyclic ring may have a double bond, and the monocyclic ring or the polycyclic ring may be an aromatic ring; 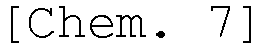 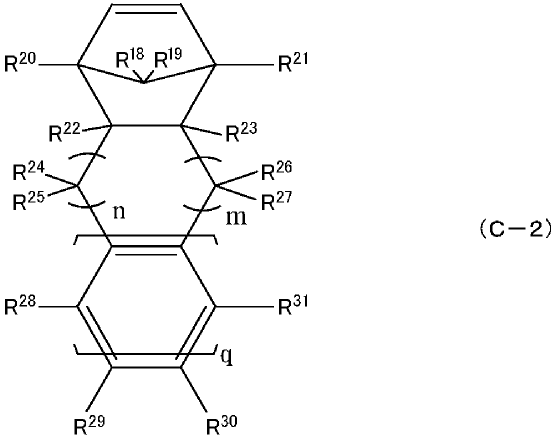 in Formula (C-2), n and m are each independently 0, 1, or 2, q is 1, 2, or 3, R¹⁸ to R³¹ are each independently a hydrogen atom, a halogen atom other than a fluorine atom, or a hydrocarbon group having 1 to 20 carbon atoms, which may be substituted with a halogen atom other than a fluorine atom, in a case of q = 1, R²⁸ and R²⁹, R²⁹ and R³⁰, or R³⁰ and R³¹ may be bonded to each other to form a monocyclic ring or a polycyclic ring, in a case of q = 2 or 3, R²⁸ and R²⁸, R²⁸ and R²⁹, R²⁹ and R³⁰, R³⁰ and R³¹, or R³¹ or R³¹ may be bonded to each other to form a monocyclic ring or a polycyclic ring, the monocyclic ring or the polycyclic ring may have a double bond, and the monocyclic ring or the polycyclic ring may be an aromatic ring; 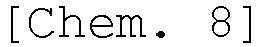 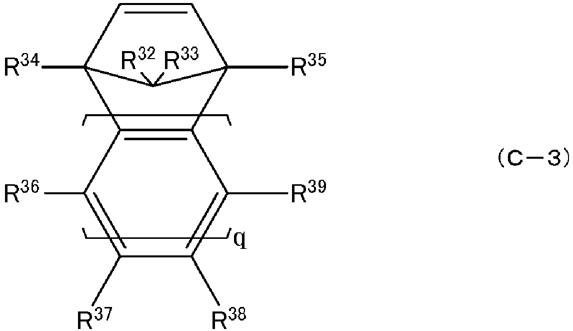 in Formula (C-3), q is 1, 2, or 3, R³² to R³⁹ are each independently a hydrogen atom, a halogen atom other than a fluorine atom, or a hydrocarbon group having 1 to 20 carbon atoms, which may be substituted with a halogen atom other than a fluorine atom, in a case of q = 1, R³⁶ and R³⁷, R³⁷ and R³⁸, or R³⁸ and R³⁹ may be bonded to each other to form a monocyclic ring or a polycyclic ring, in a case of q = 2 or 3, R³⁶ and R³⁶, R³⁶ and R³⁷, R³⁷ and R³⁸, R³⁸ and R³⁹, or R³⁹ and R³⁹ may be bonded to each other to form a monocyclic ring or a polycyclic ring, the monocyclic ring or the polycyclic ring may have a double bond, and the monocyclic ring or the polycyclic ring may be an aromatic ring.
[5] The recycled cyclic olefin resin composition according to any one of [1] to [4], further containing a lubricant (C).
[6] The recycled cyclic olefin resin composition according to any one of [1] to [5], in which the recycled cyclic olefin resin composition is pellet-shaped.
[7] A molded body containing the recycled cyclic olefin resin composition according to any one of [1] to [6].
[8] An optical component including the molded body according to [7].
[9] A method for producing a recycled cyclic olefin resin composition, the method including a step (1) of subjecting a collected cyclic olefin resin composition containing a collected cyclic olefin resin (A) to a heat treatment at a temperature of (Tg - 50°C) or higher and (Tg - 1°C) or lower in an inert atmosphere or under a reduced pressure, a glass transition temperature of the collected cyclic olefin resin (A) being denoted by Tg.
[10] The method for producing a recycled cyclic olefin resin composition according to [9], in which a time for the heat treatment in the step (1) is 4 hours or longer and 240 hours or shorter.
[11] The method for producing a recycled cyclic olefin resin composition according to [9] or [10], the method further including a step (2) of kneading the collected cyclic olefin resin composition heat-treated in the step (1) with an extruder to be made into pellets.
[12] The method for producing a recycled cyclic olefin resin composition according to [11], in which in the step (2), a screw rotation speed during the kneading with the extruder is 20 rpm or more and 420 rpm or less.
[13] The method for producing a recycled cyclic olefin resin composition according to [11] or [12], in which after the step (1) or in the step (2), at least one phenol antioxidant (B) is added in an amount of 0.01 parts by mass or more and 2.0 parts by mass or less with respect to 100 parts by mass of the collected cyclic olefin resin composition.
[14] The method for producing a recycled cyclic olefin resin composition according to any one of [11] to [13], in which in the step (2), Q/N, where a screw rotation speed during the kneading with the extruder is denoted by N [rpm] and a supply rate of the recycled cyclic olefin resin composition is denoted by Q [kg/hr], is 0.10 or more during the kneading.

### ADVANTAGEOUS EFFECTS OF INVENTION

According to the present invention, it is possible to provide a recycled cyclic olefin resin composition which enables obtaining a molded body and an optical component, with a decrease in transparency controlled, and a molded body and an optical component, with a decrease in transparency controlled.

### DESCRIPTION OF EMBODIMENT

Hereinafter, the present invention will be described based on embodiments. In the present embodiments, unless otherwise specified, "A to B" that indicates a range of numerical values represents "equal to or greater than A and equal to or smaller than B".

### [Recycled Cyclic Olefin Resin Composition]

A recycled cyclic olefin resin composition of the present invention contains a collected cyclic olefin resin (A), where a ratio (w₂/w₁) of a mass (w₂) of oxygen (O₂) contained in the recycled cyclic olefin resin composition to a total mass (w₁) of the recycled cyclic olefin resin composition is 100 ppm or less.

In the present specification, the collected cyclic olefin resin (A) collected from a used molded body, a used product, or waste materials according to known methods is referred to as a collected cyclic olefin resin (A), and a cyclic olefin resin composition subjected to recycling is referred to as a recycled cyclic olefin resin composition.

In addition, in the present specification, the amount of oxygen (O₂) contained in the cyclic olefin resin composition means the amount of oxygen (O₂) gas produced when the cyclic olefin resin composition is treated at 250°C for 1 hour.

According to the recycled cyclic olefin resin composition of the present invention, it is possible to obtain the molded body and the optical component, with a decrease in transparency controlled.

The recycled cyclic olefin resin composition according to the present invention contains a collected cyclic olefin resin (A), and may contain a component in addition to the collected cyclic olefin resin (A), as necessary. In the present specification, even in a case where the recycled cyclic olefin resin composition according to the present invention contains only the collected cyclic olefin resin (A), the recycled cyclic olefin resin composition is referred to as the recycled cyclic olefin resin composition.

The recycled cyclic olefin resin composition according to the present invention may contain an unused cyclic olefin resin (A) .

In the recycled cyclic olefin resin composition according to the present invention, the ratio (w₂/w₁) of the mass (w₂) of oxygen (O₂) contained in the recycled cyclic olefin resin composition to the total mass (w₁) of the recycled cyclic olefin resin composition is 100 ppm or less. However, from the viewpoint of further improving the transparency of the molded body and the optical component to be obtained, the ratio (w₂/w₁) is preferably 80 ppm or less, more preferably 50 ppm or less, still more preferably 30 ppm or less, and even still more preferably 25 ppm or less.

In addition, the lower limit value of w₂/w₁ is not particularly limited, but may be, for example, 1 ppm or more, 3 ppm or more, 5 ppm or more, and 10 ppm or more.

### (Cyclic Olefin Resin (A))

In the present specification, the collected cyclic olefin resin (A) and the unused cyclic olefin resin (A) are collectively referred to as a "cyclic olefin resin (A)".

The cyclic olefin resin (A) according to the present invention may be used alone, or two or more kinds thereof may be used in combination.

Injection molded bodies such as optical components described later, sprues or runners produced when injection molded bodies are molded, waste materials produced from injection molded bodies after extrusion molding, waste materials produced after extrusion molded bodies are cut into the desired shape, and other materials can be used as the collected cyclic olefin resin (A).

These molded bodies, sprues, runners, waste materials, and other materials may be used as they are, or may be pulverized to an appropriate size to be used. For the pulverization, the diameter after the pulverization is preferably 20 mm or less, more preferably 15 mm or less, and still more preferably 10 mm or less. Provided that the diameter after the pulverization is within this range, it is preferable in that melt-kneading is easily performed. A crusher or other equipment can be used for the pulverization.

From the viewpoints of further improving the heat resistance and the moldability while maintaining the good performance balance between the transparency and the refractive index of the obtained molded body and optical component, the cyclic olefin resin (A) preferably contains a cyclic olefin copolymer (P1) that contains at least one olefin-derived repeating unit (a) represented by Formula (I) and at least one cyclic olefin monomer-derived repeating unit (b) selected from the group consisting of a repeating unit (AA) represented by Formula (II), a repeating unit (AB) represented by Formula (III), and a repeating unit (AC) represented by Formula (IV). 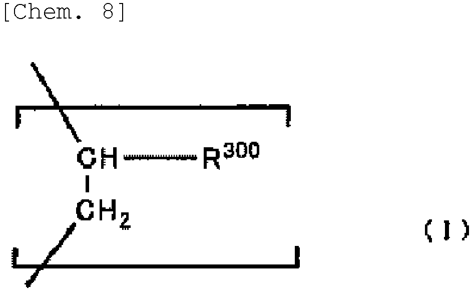 In Formula (I), R³⁰⁰ represents a hydrogen atom or a linear or branched hydrocarbon group having 1 to 29 carbon atoms. 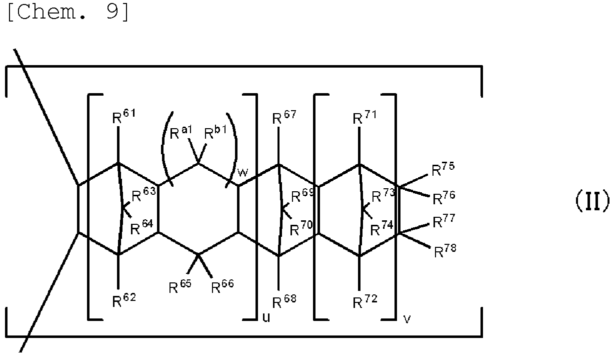 In Formula (II), u is 0 or 1, v is 0 or a positive integer, preferably an integer of 0 or more and 2 or less, and more preferably 0 or 1, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring. 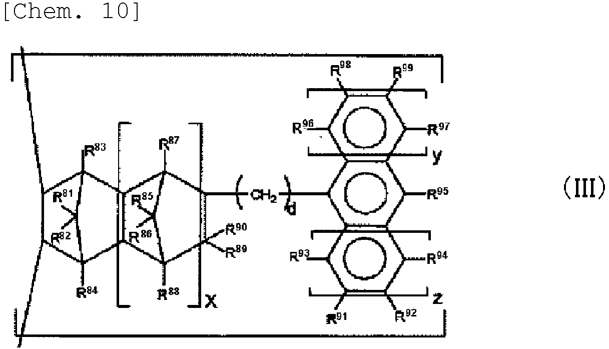 In Formula (III), x and d are each 0 or an integer of 1 or more, preferably an integer of 0 or more and 2 or less, and more preferably 0 or 1, y and z are each 0, 1, or 2, R⁸¹ to R⁹⁹ may be the same as or different from each other and are each a hydrogen atom, a halogen atom, an aliphatic hydrocarbon group, which is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be directly bonded to each other or bonded to each other through an alkylene group having 1 to 3 carbon atoms, and in a case of y = z = 0, R⁹⁵ and R⁹² or R⁹⁵ and R⁹⁹ may be bonded to each other to form a monocyclic or polycyclic aromatic ring. 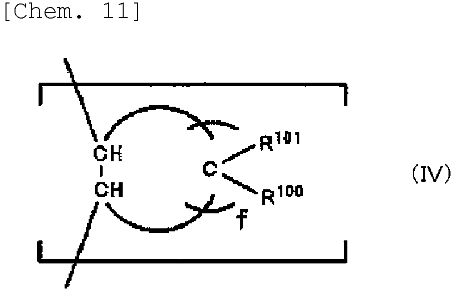 In Formula (IV), R¹⁰⁰ and R¹⁰¹ may be the same as or different from each other and are each a hydrogen atom or a hydrocarbon group having 1 to 5 carbon atoms, and f is an integer of 1 ≤ f ≤ 18.

The olefin monomer, which is one of copolymerization raw materials of the cyclic olefin copolymer (P1), is subjected to addition copolymerization to form the repeating unit (a) represented by Formula (I). Specifically, an olefin monomer represented by Formula (Ia) corresponding to Formula (I) is used.

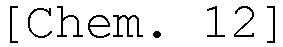

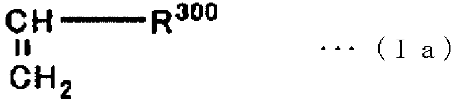

In Formula (Ia), R³⁰⁰ represents a hydrogen atom or a linear or branched hydrocarbon group having 1 to 29 carbon atoms. Examples of the above-described olefin monomer represented by Formula (Ia) include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like. Among these, at least one selected from the group consisting of ethylene and propylene is preferable, and ethylene is more preferable, from the viewpoint of obtaining a molded body having more excellent heat resistance, mechanical properties, and optical properties. Two or more kinds of the olefin monomer represented by Formula (Ia) may be used.

When the total of the repeating units constituting the cyclic olefin copolymer (P1) is 100% by mol, the proportion of the olefin-derived repeating unit (a) is preferably 5% by mol or more and 95% by mol or less, more preferably 20% by mol or more and 90% by mol or less, still more preferably 40% by mol or more and 85% by mol or less, and even still more preferably 50% by mol or more and 80% by mol or less.

The proportion of the olefin-derived repeating unit (a) can be measured by ¹³C-NMR.

The cyclic olefin monomer, which is one of the copolymerization raw materials of the cyclic olefin copolymer (P1), is subjected to addition copolymerization to form the cyclic olefin monomer-derived repeating unit (b) represented by Formula (II), Formula (III), or Formula (IV). Specifically, cyclic olefin monomers represented by Formula (IIa), Formula (IIIa), and Formula (IVa), respectively corresponding to Formula (II), Formula (III), and Formula (IV) described above, are used. 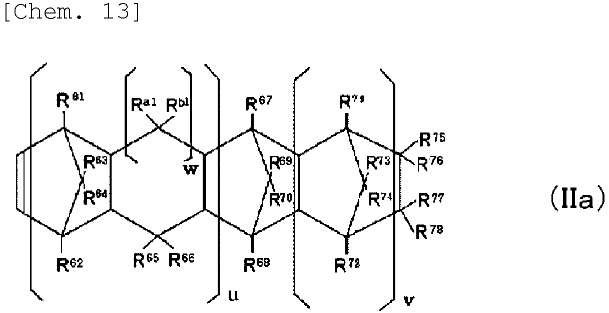 In Formula (IIa), u is 0 or 1, v is 0 or a positive integer, preferably an integer of 0 or more and 2 or less, and more preferably 0 or 1, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring. 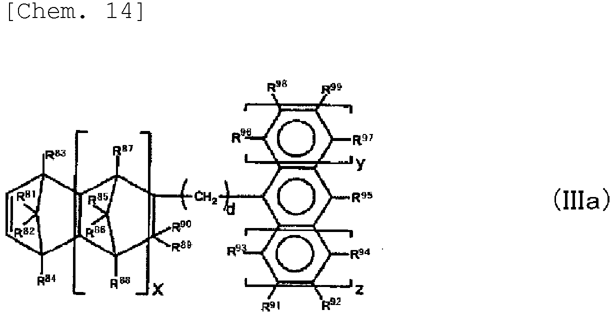 In Formula (IIIa), x and d are each 0 or an integer of 1 or more, preferably an integer of 0 or more and 2 or less, and more preferably 0 or 1, y and z are each 0, 1, or 2, R⁸¹ to R⁹⁹ may be the same as or different from each other and are each a hydrogen atom, a halogen atom, an aliphatic hydrocarbon group, which is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be directly bonded to each other or bonded to each other through an alkylene group having 1 to 3 carbon atoms, and in a case of y = z = 0, R⁹⁵ and R⁹² or R⁹⁵ and R⁹⁹ may be bonded to each other to form a monocyclic or polycyclic aromatic ring. 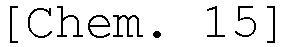 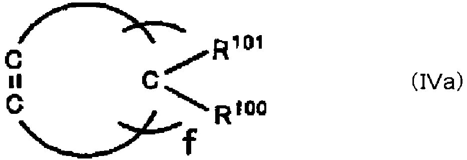 In Formula (IVa), R¹⁰⁰ and R¹⁰¹ may be the same as or different from each other and are each a hydrogen atom or a hydrocarbon group having 1 to 5 carbon atoms, and f is an integer of 1 ≤ f ≤ 18.

Since the olefin monomer represented by Formula (Ia) described above and the cyclic olefin monomer represented by Formula (IIa), (IIIa), or (IVa) are used as copolymerization components to further improve the solubility of the cyclic olefin resin (A) in a solvent, the moldability is improved, and the yield of the product is improved.

Regarding specific examples of the cyclic olefin monomer represented by Formula (IIa), (IIIa), or (IVa), compounds described in paragraphs 0037 to 0063 of Pamphlet of International Publication No. WO2006/118261 can be used.

Specifically, examples thereof include bicyclo-2-heptene derivatives (bicyclohept-2-ene derivatives), tricyclo-3-decene derivatives, tricyclo-3-undecene derivatives, tetracyclo-3-dodecene derivatives, pentacyclo-4-pentadecene derivatives, pentacyclo pentadecadien derivatives, pentacyclo-3-pentadecene derivatives, pentacyclo-4-hexadecene derivatives, pentacyclo-3-hexadecene derivatives, hexacyclo-4-heptadecene derivatives, heptacyclo-5-eicosene derivatives, heptacyclo-4-eicosene derivatives, heptacyclo-5-heneicosene derivatives, octacyclo-5-docosene derivatives, nonacyclo-5-pentacosene derivatives, nonacyclo-6-hexacosene derivatives, cyclopentadiene-acenaphthylene adducts, 1,4-methano-1,4,4a,9a-tetrahydrofluorene derivatives, 1,4-methano-1,4,4a,5,10,10a-hexahydroanthracene derivatives, cycloalkylene derivatives having 3 to 20 carbon atoms, and the like.

Among the cyclic olefin monomers represented by Formula (IIa), (IIIa), or (IVa), the cyclic olefin represented by Formula (IIa) is preferable.

In addition, it is preferable to use the cyclic olefin represented by Formula (IIa) and either the cyclic olefin represented by Formula (IIIa) or the cyclic olefin represented by Formula (IVa).

As the cyclic olefin monomer represented by Formula (IIa), at least one selected from the group consisting of bicyclo[2.2.1]-2-heptene (in the present specification, also referred to as "norbornene") and tetracyclo[4.4.0.1^{2,5}.1^{7,10}]-3-dodecene (in the present specification, also referred to as "tetracyclododecene") is preferably used, and tetracyclo[4.4.0.1^{2,5}.1^{7,10}]-3-dodecene is more preferably used. There is an advantage that elastic modulus of each of the copolymer and the molded body can be easily maintained because such a cyclic olefin has a rigid ring structure.

When the total of the repeating units constituting the cyclic olefin copolymer (P1) is 100% by mol, the proportion of the cyclic olefin monomer-derived repeating unit (b) is preferably 5% by mol or more and 95% by mol or less, more preferably 10% by mol or more and 80% by mol or less, still more preferably 15% by mol or more and 60% by mol or less, and even still more preferably 20% by mol or more and 50% by mol or less.

The copolymerization type of the cyclic olefin copolymer (P1) is not particularly limited, and examples thereof include a random copolymer, a block copolymer, and other copolymers. It is preferable to use a random copolymer as the cyclic olefin copolymer (P1), from the viewpoints that optical properties such as transparency, refractive index, and birefringence index can be made excellent, and a highly accurate optical component can be obtained.

As the cyclic olefin copolymer (P1), it is preferable to use at least one selected from the group consisting of a random copolymer of ethylene and tetracyclo[4.4.0.1^{2,5}.1^{7,10}]-3-dodecene, a random copolymer of ethylene and bicyclo[2.2.1]-2-heptene, and a random copolymer of ethylene, tetracyclo[4.4.0.1²,⁵.1^{7,10}]-3-dodecene, and benzonorbornadiene; more preferable to use at least one selected from the group consisting of a random copolymer of ethylene and tetracyclo[4.4.0.1^{2,5}.1^{7,10}]-3-dodecene, and a random copolymer of ethylene, tetracyclo[4.4.0.1^{2,5}.1^{7,10}]-3-dodecene, and benzonorbornadiene; and still more preferable to use a random copolymer of ethylene and tetracyclo[4.4.0.1^{2,5}.1^{7,10}]-3-dodecene.

One kind of the cyclic olefin copolymer (P1) may be used alone, or two or more kinds thereof may be used in combination.

The cyclic olefin copolymer (P1) can be produced, for example, by appropriately selecting conditions according to the methods of Japanese Published Patent Application S60-168708, Japanese Published Patent Application S61-120816, Japanese Published Patent Application S61-115912, Japanese Published Patent Application S61-115916, Japanese Published Patent Application S61-271308, Japanese Published Patent Application S61-272216, Japanese Published Patent Application S62-252406, Japanese Published Patent Application S62-252407, and the like.

From the viewpoints of further improving the heat resistance and the moldability while maintaining the good performance balance between the transparency and the refractive index of the obtained molded body and optical component, the cyclic olefin resin (A) preferably contains a cyclic olefin copolymer (P2) in which the repeating unit (AA) represented by Formula (II) and the constituent unit (C) derived from a cyclic olefin having an aromatic ring are contained, the repeating unit (AA) contains no aromatic ring, and the cyclic olefin having an aromatic ring contains at least one selected from the group consisting of a compound represented by Formula (C-1), a compound represented by Formula (C-2), and a compound represented by Formula (C-3). 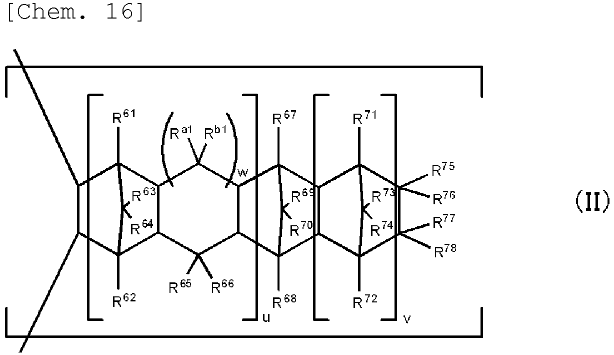 In Formula (II), u is 0 or 1, v is 0 or a positive integer, preferably an integer of 0 or more and 2 or less, and more preferably 0 or 1, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, and R⁷⁵ to R⁷⁸ may be bonded to each other to form a monocyclic ring or a polycyclic ring.

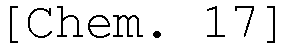

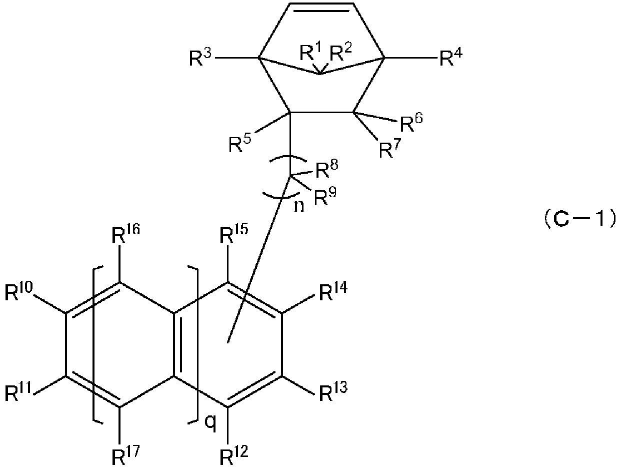

In Formula (C-1), n and q are each independently 0, 1, or 2, R¹ to R¹⁷ are each independently a hydrogen atom, a halogen atom other than a fluorine atom, or a hydrocarbon group having 1 to 20 carbon atoms, which may be substituted with a halogen atom other than a fluorine atom, one of R¹⁰ to R¹⁷ is a bonding site, in a case of q = 0, R¹⁰ and R¹¹, R¹¹ and R¹², R¹² and R¹³, R¹³ and R¹⁴, R¹⁴ and R¹⁵, or R¹⁵ and R¹⁰ may be bonded to each other to form a monocyclic ring or a polycyclic ring, in a case of q = 1 or 2, R¹⁰ and R¹¹, R¹¹ and R¹⁷, R¹⁷ and R¹⁷, R¹⁷ and R¹², R¹² and R¹³, R¹³ and R¹⁴, R¹⁴ and R¹⁵, R¹⁵ and R¹⁶, R¹⁶ and R¹⁶, or R¹⁶ and R¹⁰ may be bonded to each other to form a monocyclic ring or a polycyclic ring, the monocyclic ring or the polycyclic ring may have a double bond, and the monocyclic ring or the polycyclic ring may be an aromatic ring.

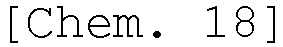

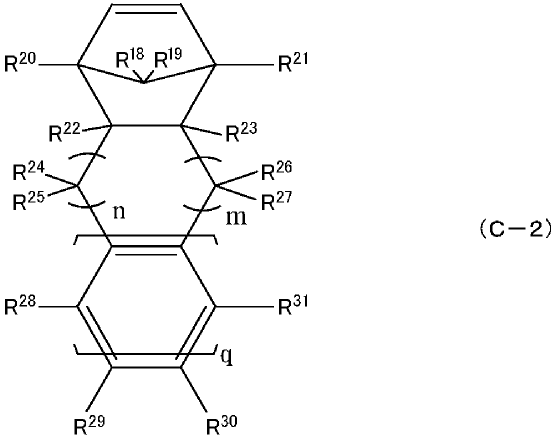

In Formula (C-2), n and m are each independently 0, 1, or 2, q is 1, 2, or 3, R¹⁸ to R³¹ are each independently a hydrogen atom, a halogen atom other than a fluorine atom, or a hydrocarbon group having 1 to 20 carbon atoms, which may be substituted with a halogen atom other than a fluorine atom, in a case of q = 1, R²⁸ and R²⁹, R²⁹ and R³⁰, or R³⁰ and R³¹ may be bonded to each other to form a monocyclic ring or a polycyclic ring, in a case of q = 2 or 3, R²⁸ and R²⁸, R²⁸ and R²⁹, R²⁹ and R³⁰, R³⁰ and R³¹, or R³¹ and R³¹ may be bonded to each other to form a monocyclic ring or a polycyclic ring, the monocyclic ring or the polycyclic ring may have a double bond, and the monocyclic ring or the polycyclic ring may be an aromatic ring.

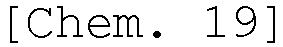

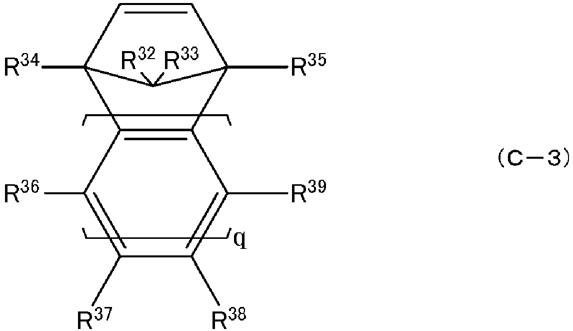

In Formula (C-3), q is 1, 2, or 3, R³² to R³⁹ are each independently a hydrogen atom, a halogen atom other than a fluorine atom, or a hydrocarbon group having 1 to 20 carbon atoms, which may be substituted with a halogen atom other than a fluorine atom, in a case of q = 1, R³⁶ and R³⁷, R³⁷ and R³⁸, or R³⁸ and R³⁹ may be bonded to each other to form a monocyclic ring or a polycyclic ring, in a case of q = 2 or 3, R³⁶ and R³⁶, R³⁶ and R³⁷, R³⁷ and R³⁸, R³⁸ and R³⁹, or R³⁹ and R³⁹ may be bonded to each other to form a monocyclic ring or a polycyclic ring, the monocyclic ring or the polycyclic ring may have a double bond, and the monocyclic ring or the polycyclic ring may be an aromatic ring.

Since the cyclic olefin copolymer (P2) contains the repeating unit (AA) represented by Formula (II) and the constituent unit (C) derived from a cyclic olefin having an aromatic ring, the moist heat resistance can be further improved while the good transparency is maintained.

### (Cyclic Olefin-derived Repeating Unit (AA))

The repeating unit (AA) is represented by Formula (II). Since the repeating unit (AA) is contained, the refractive index of the obtained molded body can be further improved.

In addition, the repeating unit (AA) in the cyclic olefin copolymer (P2) contains no aromatic ring. Since the repeating unit (AA) contains no aromatic ring, the moldability of the obtained molded body can be further improved.

When the total content of the repeating unit (AA) and the constituent unit (C) in the cyclic olefin copolymer (P2) is 100% by mol, the content of the repeating unit (AA) in the cyclic olefin copolymer (P2) is preferably 5% by mol or more and 95% by mol or less, more preferably 30% by mol or more and 95% by mol or less, and still more preferably 50% by mol or more and 95% by mol or less.

In the present embodiment, the content of the repeating unit (AA) can be measured by, for example, ¹H-NMR or ¹³C-NMR.

### (Constituent Unit (C) Derived from Cyclic Olefin Having Aromatic Ring)

The constituent unit (C) is derived from a cyclic olefin having an aromatic ring.

Examples of the cyclic olefin having an aromatic ring include a compound represented by Formula (C-1), a compound represented by Formula (C-2), a compound represented by Formula (C-3), and other compounds. These cyclic olefins having an aromatic ring may be used alone, or two or more kinds thereof may be used in combination.

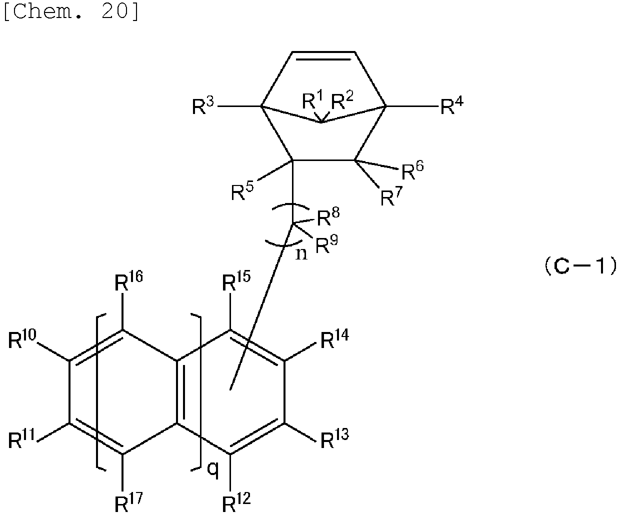

In Formula (C-1), n and q are each independently 0, 1, or 2. n is preferably 0 or 1 and more preferably 0. q is preferably 0 or 1 and more preferably 0.

R¹ to R¹⁷ are each independently a hydrogen atom, a halogen atom other than a fluorine atom, or a hydrocarbon group having 1 to 20 carbon atoms, which may be substituted with a halogen atom other than a fluorine atom, one of R¹⁰ to R¹⁷ is a bonding site, and R¹⁵ is preferably a bonding site.

R¹ to R¹⁷ are each independently preferably a hydrogen atom or a hydrocarbon group having 1 to 20 carbon atoms and more preferably a hydrogen atom.

Provided that q = 0, R¹⁰ and R¹¹, R¹¹ and R¹², R¹² and R¹³, R¹³ and R¹⁴, R¹⁴ and R¹⁵, or R¹⁵ and R¹⁰ may be bonded to each other to form a monocyclic ring or a polycyclic ring, in a case of q = 1 or 2, R¹⁰ and R¹¹, R¹¹ and R¹⁷, R¹⁷ and R¹⁷, R¹⁷ and R¹², R¹² and R¹³, R¹³ and R¹⁴, R¹⁴ and R¹⁵, R¹⁵ and R¹⁶, R¹⁶ and R¹⁶, or R¹⁶ and R¹⁰ may be bonded to each other to form a monocyclic ring or a polycyclic ring, the monocyclic ring or the polycyclic ring may have a double bond, and the monocyclic ring or the polycyclic ring may be an aromatic ring.

In Formula (C-1) described above, a compound represented by the following Formula (C-1A) is preferable. 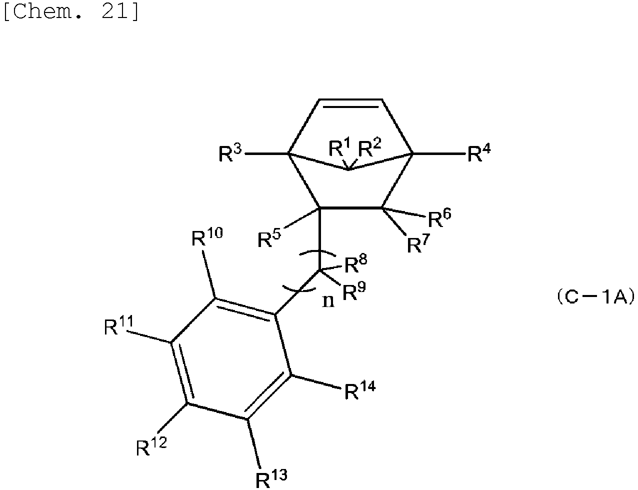 In Formula (C-1A), n is 0, 1, or 2, preferably 0 or 1, and more preferably 0.

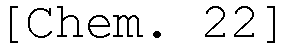

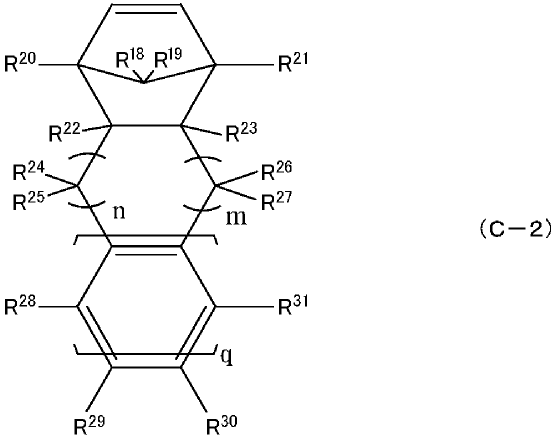

In Formula (C-2) described above, n and m are each independently 0, 1, or 2, q is 1, 2, or 3. m is preferably 0 or 1 and more preferably 1. n is preferably 0 or 1 and more preferably 0. q is preferably 1 or 2 and more preferably 1.

R¹⁸ to R³¹ are each independently a hydrogen atom, a halogen atom other than a fluorine atom, or a hydrocarbon group having 1 to 20 carbon atoms, which may be substituted with a halogen atom other than a fluorine atom.

R¹⁸ to R³¹ are each independently preferably a hydrogen atom or a hydrocarbon group having 1 to 20 carbon atoms and more preferably a hydrogen atom.

In addition, provided that q = 1, R²⁸ and R²⁹, R²⁹ and R³⁰, or R ³⁰ and R³¹ may be bonded to each other to form a monocyclic or polycyclic ring, and provided that q = 2 or 3, R²⁸ and R²⁸, R²⁸ and R²⁹, R²⁹ and R³⁰, R³⁰ and R³¹, or R³¹ and R³¹ may be bonded to each other to form a monocyclic or polycyclic ring, where the monocyclic ring or the polycyclic ring may have a double bond, and the monocyclic ring or the polycyclic ring may be an aromatic ring.

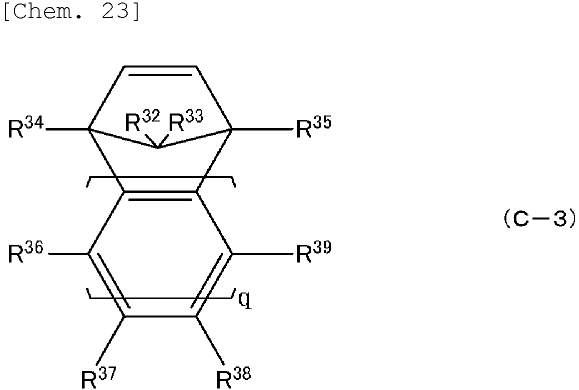

In Formula (C-3) described above, q is 1, 2, or 3, preferably 1 or 2, and more preferably 1.

R³² to R³⁹ are each independently a hydrogen atom, a halogen atom other than a fluorine atom, or a hydrocarbon group having 1 to 20 carbon atoms, which may be substituted with a halogen atom other than a fluorine atom.

R³² to R³⁹ are each independently preferably a hydrogen atom or a hydrocarbon group having 1 to 20 carbon atoms and more preferably a hydrogen atom.

In addition, provided that q = 1, R³⁶ and R³⁷, R³⁷ and R³⁸, or R³⁸ and R³⁹ may be bonded to each other to form a monocyclic or polycyclic ring, and provided that q = 2 or 3, R³⁶ and R³⁶, R³⁶ and R³⁷, R³⁷ and R³⁸, R³⁸ and R³⁹, or R³⁹ and R³⁹ may be bonded to each other to form a monocyclic or polycyclic ring, where, the monocyclic ring or the polycyclic ring may have a double bond, and the monocyclic ring or the polycyclic ring may be an aromatic ring.

In addition, examples of the hydrocarbon group having 1 to 20 carbon atoms include, each independently, an alkyl group having 1 to 20 carbon atoms, a cycloalkyl group having 3 to 15 carbon atoms, an aromatic hydrocarbon group, and the like. More specifically, examples of the alkyl group include a methyl group, an ethyl group, a propyl group, an isopropyl group, an amyl group, a hexyl group, an octyl group, a decyl group, a dodecyl group, an octadecyl group, and the like, and examples of the cycloalkyl group include a cyclohexyl group and the like, and examples of the aromatic hydrocarbon group include an aryl group such as a phenyl group, a trill group, a naphthyl group, a benzyl group, and a phenylethyl group, or an aralkyl group and the like. These hydrocarbon groups may be substituted with a halogen atom other than a fluorine atom.

Among these, the cyclic olefin having an aromatic ring is preferably, for example, at least one selected from the group consisting of benzonorbornadiene, indene norbornene, and methylphenyl norbornene.

When the total content of the repeating unit (AA) and the constituent unit (C) in the cyclic olefin copolymer (P2) is 100% by mol, the content of the constituent unit (C) in the cyclic olefin copolymer (P2) is preferably 5% by mol or more and 95% by mol or less, more preferably 5% by mol or more and 70% by mol or less, and still more preferably 5% by mol or more and 50% by mol or less.

In the present embodiment, the content of the repeating unit (AA) and the content of the constituent unit (C) can be measured by, for example, ¹H-NMR or ¹³C-NMR.

The copolymerization type of the cyclic olefin copolymer (P2) is not particularly limited, and examples thereof include a random copolymer, a block copolymer, and other copolymers. In the present embodiment, it is preferable to use a random copolymer as the cyclic olefin copolymer (P2), from the viewpoint that the optical component having excellent transparency and heat resistance.

The cyclic olefin copolymer (P2) can be produced by, for example, appropriately selecting conditions according to the methods described in Japanese Unexamined Patent Publication No. 60-168708, Japanese Unexamined Patent Publication No. 61-120816, Japanese Unexamined Patent Publication No. 61-115912, Japanese Unexamined Patent Publication No. 61-115916, Japanese Unexamined Patent Publication No. 61-271308, Japanese Unexamined Patent Publication No. 61-272216, Japanese Unexamined Patent Publication No. 62-252406, Japanese Unexamined Patent Publication No. 62-252407, Japanese Unexamined Patent Publication No. 2007-314806, Japanese Unexamined Patent Publication No. 2010-241932, and other patent documents.

According to ASTM D1238, the lower limit of a melt flow rate (MFR) of the cyclic olefin resin (A) measured at 260°C and a load of 2.16 kg is preferably equal to or more than 5 g/10 minutes, more preferably equal to or more than 8 g/10 minutes, and still more preferably equal to or more than 10 g/10 minutes from the viewpoint of processability, ease of manufacture of the cyclic olefin resin (A), and the like.

The upper limit of the MFR of the cyclic olefin resin (A) is, for example, equal to or less than 100 g/10 minutes.

A carbon-carbon double bond is preferably not contained in the cyclic olefin resin (A), but in a case where the carbon-carbon double bond is contained, it is preferable to contain equal to or less than 0.5 g of the carbon-carbon double bond in 100 g of the cyclic olefin resin (A). The deterioration of the resin composition can be prevented by containing substantially no carbon-carbon double bond, which is preferable. A content of the carbon-carbon double bond in the cyclic olefin resin (A) is determined by an iodine value method (titration method) according to JIS K0070.

From the viewpoint of improving the performance balance between the moldability, the transparency, and the heat resistance, the glass transition temperature (Tg) of the cyclic olefin resin (A) is preferably 70°C or higher, more preferably 80°C or higher, still more preferably 90°C or higher, even still more preferably 100°C or higher, even still more preferably 110°C or higher, and even still more preferably 120°C or higher, and from the same viewpoint, the glass transition temperature (Tg) is preferably 250°C or lower, more preferably 200°C or lower, still more preferably 180°C or lower, even still more preferably 160°C or lower, and even still more preferably 150°C or lower.

The glass transition temperature (Tg) of the cyclic olefin resin (A) can be measured by, for example, a method described in Examples.

From the viewpoint of further improving the performance balance between the moldability and the optical properties, the limiting viscosity η [dl/g] (decalin at 135°C) of the cyclic olefin resin (A) is preferably 0.05 dl/g or more, more preferably 0.1 dl/g or more, still more preferably 0.2 dl/g or more, even still more preferably 0.3 dl/g or more, and from the same viewpoint, the limiting viscosity η [dl/g] (decalin at 135°C) is preferably 5.0 dl/g or less, more preferably 4.0 dl/g or less, still more preferably 2.0 dl/g or less, and even still more preferably 1.0 dl/g or less.

The limiting viscosity η [dl/g] of the cyclic olefin resin (A) can be measured according to ASTM J1601.

From the viewpoint of further improving the performance balance between the moldability and the transparency, the content of the cyclic olefin resin (A) according to the present invention in the recycled cyclic olefin resin composition according to the present invention is preferably 50% by mass or more, more preferably 70% by mass or more, still more preferably 80% by mass or more, even still more preferably 90% by mass or more, even still more preferably 95% by mass or more, even still more preferably 98% by mass or more, and even still more preferably 99% by mass or more, and is preferably 100% by mass or less, based on the total of the recycled cyclic olefin resin composition of 100% by mass.

In addition, the content of the collected cyclic olefin resin (A) in the cyclic olefin resin (A) is preferably 30% by mass or more, more preferably 50% by mass or more, still more preferably 70% by mass or more, even still more preferably 80% by mass or more, even still more preferably 90% by mass or more, even still more preferably 95% by mass or more, and even still more preferably 98% by mass or more, and is preferably 100% by mass or less, based on the total of the recycled cyclic olefin resin composition of 100% by mass.

### (Other Component)

The recycled cyclic olefin resin composition according to the present invention can contain other known components as optional components in addition to the collected cyclic olefin resin (A) and the unused cyclic olefin resin (A) within a range that does not impair the good physical properties of the recycled cyclic olefin resin composition according to the present invention.

Examples of the other components include an antioxidant, a resin other than the cyclic olefin resin (A), a weather fastness stabilizer, a heat resistance stabilizer, an antistatic agent, a flame retardant, a slip agent, an antiblocking agent, an antifogging agent, the lubricant (C), a dye, a pigment, a natural oil, a synthetic oil, a wax, and an organic or inorganic filler. The blending proportion of the other components is an appropriate amount.

### (Phenol Antioxidant (B))

As an antioxidant, a phenol antioxidant (B) is preferable, and an alkylphenol antioxidant is more preferable.

As the phenol antioxidants, Conventionally known phenol antioxidants can be used, and examples thereof include the acrylate phenol compounds described in Japanese Unexamined Patent Publication No. 63-179953 and Japanese Unexamined Patent Publication No. 1-168643 such as 2-tertiary butyl-6-(3-tertiary butyl-2-hydroxy-5-methylbenzyl)-4-methylphenyl acrylate, 2,4-di-tertiary amyl-6-(1-(3,5-di-tertiary amyl-2-hydroxyphenyl)ethyl)phenyl acrylate; alkyl-substituted phenol compounds such as 2,6-di-tertiary butyl-4-methylphenol, 2,6-di-tertiary butyl-4-ethylphenol, octadecyl-3-(3,5-di-tertiary butyl-4-hydroxyphenyl)propionate, 2,2'-methylene-bis(4-methyl-6-tertiary butylphenol), 4,4'-butylidene-bis(6-tertiary butyl-m-cresol), 4,4'-thiobis(3-methyl-6-tertiary butylphenol), bis(3-cyclohexyl-2-hydroxy-5-methylphenyl)methane, 3,9-bis(2-(3-(3-tertiary butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-tertiary butylphenyl)butane, 1,3,5-trimethyl-2,4,6-tris(3,5-di-tertiary butyl-4-hydroxybenzyl)benzene, tetrakis(methylene-3-(3',5'-di-tertiary butyl-4'-hydroxyphenylpropionate) methane [that is, pentaerythrimethyl-tetrakis(3-(3,5-di-tertiary butyl-4-hydroxyphenylpropionate)], triethylene glycol bis(3-(3-tertiary butyl-4-hydroxy-5-methylphenyl)propionate), and tocopherol; triazine group-containing phenol compounds such as 6-(4-hydroxy-3,5-di-tertiary butylanilino)-2,4-bisoctylthio-1,3,5-triazine, 6-(4-hydroxy-3,5-dimethylanilino)-2,4-bisoctylthio-1,3,5-triazine, 6-(4-hydroxy-3-methyl-5-tertiary butylanilino)-2,4-bisoctylthio-1,3,5-triazine, and 2-octylthio-4,6-bis-(3,5-di-tertiary butyl-4-oxyanilino)-1,3,5-triazine; 6-[3-(3-t-butyl-4-hydroxy-5-methylphenyl)propoxy]-2,4,8,10-tetrakis-t-butyldibenzo[d,f][1.3.2]dioxaphosphepine, and other phenol antioxidants.

The content of the phenol antioxidant (B) in the recycled cyclic olefin resin composition according to the present invention is preferably 0.01 parts by mass or more, more preferably 0.02 parts by mass or more, and still more preferably 0.05 parts by mass or more, and is preferably 2.0 parts by mass or less, more preferably 1.0 parts by mass or less, and still more preferably 0.5 parts by mass or less with respect to 100 parts by mass of the cyclic olefin resin (A). Since the content of the phenol antioxidant (B) in the recycled cyclic olefin resin composition is within the above-described range, the effect of preventing oxidation and deterioration can be further improved. Accordingly, it is possible to control an increase in volatile components during the heating and to further control a decrease in quality of mechanical strength or the like of the obtained recycled cyclic olefin resin composition.

### (Lubricant (C))

From the viewpoint of controlling the production of a gel-like substance with a small amount of addition, the lubricant (C) preferably contains a compound having a lubricating action, more preferably contains one or two or more kinds of compounds selected from the group consisting of an aliphatic acid, an aliphatic acid salt, a polyhydric alcohol aliphatic acid ester, an amide compound, an oil agent, and waxes. From the viewpoint of further controlling the amount of gel-like substances and foreign matters such as burnt matters, controlling a decrease in the transparency of the obtained molded body and the optical component, and further improving the light transmittance, the lubricant (C) still more preferably contains one or two or more kinds selected from the group consisting of an aliphatic amide lubricant and an aliphatic acid metal salt lubricant. The lubricant (C) still more preferably contains one or two or more kinds selected from the group consisting of aliphatic acid metal salt lubricants such as zinc stearate, calcium stearate, magnesium stearate, lithium stearate, sodium stearate, calcium 12-hydroxystearate, zinc 12-hydroxystearate, sodium 12-hydroxystearate, zinc montanate and sodium montanate, and aliphatic amide lubricants such as methylene bis stearic acid amide and ethylene bis stearic acid amide. The lubricant (C) still more preferably contains one or two or more kinds selected from the group consisting of zinc 12-hydroxystearate and ethylene bis stearic acid amide, and still more preferably contains ethylene bis stearic acid amide.

The lubricant (C) preferably has a melting point higher than the glass transition point of the cyclic olefin resin (A). The melting point of the lubricant (C) is preferably 130°C or higher, more preferably 135°C or higher, and still more preferably 140°C or higher, and is preferably 230°C or lower, more preferably 200°C or lower, still more preferably 180°C or lower, even still more preferably 160°C or lower, and even still more preferably 150°C or lower.

From the viewpoint of further controlling the amount of gel-like substances and foreign matters such as burnt matters, controlling a decrease in the transparency of the obtained molded body and the optical component, and further improving the light transmittance, the content of the lubricant (C) in the recycled cyclic olefin resin composition according to the present invention is preferably 0.001 parts by mass or more, more preferably 0.005 parts by mass or more, still more preferably 0.01 parts by mass or more, and even still more preferably 0.02 parts by mass or more, and is preferably 1.0 parts by mass or less, more preferably 0.5 parts by mass or less, still more preferably 0.3 parts by mass or less, even still more preferably 0.1 parts by mass or less, and even still more preferably 0.05 parts by mass or less, with respect to 100 parts by mass of the cyclic olefin resin (A).

### (Resin Other Than Cyclic Olefin Resin (A))

Examples of the resin other than the cyclic olefin resin (A) include a polyolefin; halogen-containing vinyl polymers such as polyvinyl chloride and chlorinated rubber; polymers derived from α,β-unsaturated acids and derivatives thereof, such as polyacrylate, polymethacrylate, and acrylonitrile-butadienestyrene copolymers; polyvinyl alcohol; polyvinyl acetate; epoxides, for example, polymers derived from polyethylene oxide; polyacetals; polyphenylene oxide; polycarbonates; polysulfones; polyurethanes; urea resins; polyamides; copolyamides; polyesters such as polyethylene terephthalate; polymers with crosslinking structures derived from aldehydes and phenols, urea, or melamine, such as phenol-formaldehyde resins; alkyd resins; unsaturated polyester resins derived from copolyesters of saturated and unsaturated dicarboxylic acids and polyhydric alcohols and obtained by using vinyl compounds as crosslinking agents, as well as halogen-containing modified resins; natural polymers such as cellulose and rubber; soft polymers such as α-olefin copolymers and α-olefin-diene copolymers, and other resins.

Known methods can be applied as a method of mixing the cyclic olefin resin (A) with other components. For example, a method of simultaneously mixing individual components is used. In addition, the other components may be mixed with the unused cyclic olefin resin (A), followed by mixing with the collected cyclic olefin resin (A).

### [Method for Producing Recycled Cyclic Olefin Resin Composition]

A method for producing the recycled cyclic olefin resin composition according to the present invention includes a step (1) of subjecting a collected cyclic olefin resin composition containing a collected cyclic olefin resin (A) to a heat treatment at a temperature of (Tg - 50°C) or higher and (Tg - 1°C) or lower in an inert atmosphere or under a reduced pressure, a glass transition temperature of the collected cyclic olefin resin (A) being denoted by Tg. As a result, it is possible to obtain the recycled cyclic olefin resin composition capable of obtaining the molded body and the optical component, with a decrease in transparency controlled.

The heat treatment temperature in the step (1) is preferably (Tg - 40°C) or higher, more preferably (Tg - 30°C) or higher, and still more preferably (Tg - 20°C) or higher, and is preferably (Tg - 1°C) or lower, more preferably (Tg - 5°C) or lower, and still more preferably (Tg - 10°C) or lower, from the viewpoint of further improving the transparency of the obtained molded body and optical component.

In the step (1), the collected cyclic olefin resin composition is subjected to a heat treatment in an inert atmosphere or under a reduced pressure.

Examples of the inert gas used when the heat treatment is performed in the inert atmosphere include nitrogen, argon, and other inert gas, and from the viewpoint of manufacturing cost, nitrogen is preferable.

The degree of the reduced pressure (absolute pressure) when the heat treatment is performed under the reduced pressure is preferably 10 kPa or less, more preferably 5 kPa or less, still more preferably 3 kPa or less, and even still more preferably 2 kPa or less, and is preferably 0.1 kPa or more, from the viewpoint that the step (1) can be performed in a shorter time.

The time for the heat treatment in the step (1) is preferably 4 hours or longer, more preferably 8 hours or longer, and still more preferably 10 hours or longer, from the viewpoint of further improving the transparency of the obtained molded body and optical component, and the time for the heat treatment in the step (1) is preferably 240 hours or shorter, more preferably 150 hours or shorter, still more preferably 100 hours or shorter, even still more preferably 50 hours or shorter, and even still more preferably 24 hours or shorter, from the viewpoints of further improving the transparency of the obtained molded body and optical component and improving the productivity.

The method for producing a recycled cyclic olefin resin composition according to the present invention can further include a step (2) of kneading the collected cyclic olefin resin composition heat-treated in the step (1) with an extruder to be made into pellets. That is, the recycled cyclic olefin resin composition according to the present invention can be made into pellets.

In the step (2), the collected cyclic olefin resin composition, which has been heat-treated in the step (1), is put into an extruder and kneaded, and made into pellets. The extruder is not particularly limited, and a single screw extruder or a twin screw extruder can be used.

In the step (2), the screw rotation speed during the kneading with the extruder is preferably 20 rpm or more and more preferably 30 rpm or more, and is preferably 420 rpm or less, more preferably 400 rpm or less, still more preferably 350 rpm or less, even still more preferably 300 rpm or less, even still more preferably 250 rpm or less, even still more preferably 200 rpm or less, and even still more preferably 180 rpm or less. Provided that the screw rotation speed during the kneading with the extruder is within the above-described range, it is possible to further control the shear force on the recycled cyclic olefin resin composition during the kneading while the meltability of the resin is maintained as good, and it is possible to further prevent the occurrence of defects in appearance and yellowing.

In the step (2), Q/N, where the screw rotation speed during the kneading with the extruder is denoted by N [rpm] and the supply rate of the recycled cyclic olefin resin composition is denoted by Q [kg/hr], during the kneading treatment is preferably 0.05 or more, more preferably 0.10 or more, still more preferably 0.12 or more, even still more preferably 0.15 or more, even still even more preferably 0.20 or more, even still further preferably 0.25 or more, even still further preferably 0.30 or more, and even still further preferably 0.45 or more, and is preferably 1.0 or less, more preferably 0.90 or less, still more preferably 0.85 or less, even still more preferably 0.70 or less, and even still even more preferably 0.60 or less. Provided that the Q/N during the kneading is within the above-described range, it is possible to further control the shear force applied on the recycled cyclic olefin resin composition during the kneading, and to further prevent the occurrence of defects in appearance and yellowing.

The melt-kneaded recycled cyclic olefin resin composition is obtained in a strand shape from the extruder, followed by subjecting the resulting strands to water cooling and cutting to be made into pellets.

Furthermore, after the pellets are dried to a bone dry state, the pellets are put into an injection molding machine, and a molded body can be obtained in, for example, a mold heated to (Tg - 50) °C to (Tg - 3) °C based on the glass transition point (Tg) of the recycled cyclic olefin resin composition. Here, since the mold temperature is set to (Tg - 50) °C or higher, it is possible to obtain the molded body having a desired shape with an excellent appearance without solidification before the molten resin sufficiently flows into the mold. In addition, provided that the temperature is (Tg - 3) °C or lower, the cooling of the resin does not take long, which does not thus become a factor in the reduction of productivity. The temperature of the mold is more preferably (Tg - 30) °C to (Tg - 5) °C. After the injection of the molten resin into the mold, it is preferable to apply the appropriate dwelling for transferring the mold shape and hold the mold in a closed state for a certain period of time in order to solidify the filling resin.

After the step (1) or before the step (2), or preferably between the step (1) and the step (2), at least one phenol antioxidant (B) can be added to the collected cyclic olefin resin composition.

The phenol antioxidant (B) is added to the collected cyclic olefin resin composition by, for example, using a blender such as a Henschel mixer.

The addition amount of the phenol antioxidant (B) is preferably 0.01 parts by mass or more, more preferably 0.02 parts by mass or more, and still more preferably 0.05 parts by mass or more, and is preferably 2.0 parts by mass or less, more preferably 1.0 parts by mass or less, and still more preferably 0.5 parts by mass or less with respect to 100 parts by mass of the collected cyclic olefin resin composition. Provided that the addition amount of the phenol antioxidant (B) is within the above-described range, the effect of preventing oxidation deterioration can be further improved. Thus, it is possible to reduce an increase in volatile components during the heating and to further control a decrease in quality of mechanical strength or the like of the obtained recycled cyclic olefin resin composition.

In the method for producing a recycled cyclic olefin resin composition according to the present invention, foreign matters mixed in the resin can be removed by attaching a polymer filter to an outlet of the extruder and passing the molten recycled cyclic olefin resin composition through the polymer filter.

The opening of the filter is preferably 30 µm or less, more preferably 25 µm or less, and still more preferably 20 µm or less.

### [Molded Body and Optical Component]

The molded body according to the present invention contains the above-described recycled cyclic olefin resin composition according to the present invention.

Since the molded body according to the present invention contains the recycled cyclic olefin resin composition according to the present invention, the balance between heat resistance, chemical resistance, and low moisture absorbency is good, and a decrease in the transparency is controlled.

From the viewpoint of further improving the performance balance between the moldability and the optical properties, the content of the cyclic olefin resin (A) according to the present invention in the molded body according to the present invention is preferably 50% by mass or more, more preferably 70% by mass or more, still more preferably 80% by mass or more, even still more preferably 90% by mass or more, even still more preferably 95% by mass or more, even still more preferably 98% by mass or more, and even still more preferably 99% by mass or more, and is preferably 100% by mass or less, based on the total of the molded body of 100% by mass.

The molded body according to the present invention can be obtained by molding the recycled cyclic olefin resin composition according to the present invention into a predetermined shape in a mold. The method for molding the recycled cyclic olefin resin composition according to the present invention to obtain a molded body is not particularly limited, and any known method can be used.

The method may depend on the application and shape, but for example, extrusion molding, injection molding, compression molding, inflation molding, blow molding, extrusion blow molding, injection blow molding, press molding, vacuum molding, powder slush molding, calender molding, foam molding, and the like can be adopted. Among these, from the viewpoint of moldability and productivity, an injection molding method and an extrusion molding method are preferable, and an injection molding method is more preferable. Molding conditions are appropriately selected depending on the purpose of use or molding methods, and for example, a resin temperature in the injection molding is appropriately selected, for example, within a range of 150°C to 400°C, preferably 200°C to 350°C, and more preferably 230°C to 330°C.

The molded body according to the present invention can be used in various forms such as a lens shape, a spherical shape, a rod shape, a plate shape, a columnar shape, a cylindrical shape, a tubular shape, a fibrous shape, and a film or sheet shape.

The molded body according to the present invention can contain, as optional components, other known components in addition to the recycled cyclic olefin resin composition according to the present invention, within a range where good physical properties of the molded body according to the present invention are not impaired.

Examples of the other components include an antioxidant, a resin other than the cyclic olefin resin (A), a weather fastness stabilizer, a heat resistance stabilizer, an antistatic agent, a flame retardant, a slip agent, an antiblocking agent, an antifogging agent, a lubricant, a dye, a pigment, a natural oil, a synthetic oil, a wax, and an organic or inorganic filler. The blending proportion of the other components is an appropriate amount.

As the antioxidant, the above-described phenol antioxidant (B) is preferable.

As the lubricant, the above-described lubricant (C) is preferable.

The molded body according to the present invention can be suitably used as an optical component.

The optical component is used in an optical system device or other devices, and specifically, can be suitably used for an optical component where heat resistance is required, such as a sensor lens, a pickup lens, a projector lens, a prism, an fθ lens, an imaging lens, a light guide plate, an on-vehicle camera lens, or a camera lens for a portable device (a mobile phone, a smartphone, a tablet, or the like). Examples of the on-vehicle camera lens and the camera lens for a portable device include a view camera lens; a sensing camera lens; a lens for optical convergence of a head-up display; a lens for light diffusion of a head-up display; and a lens in various optical devices such as a camera for a personal computer, a camera for a mobile phone, a camera for a smartphone, a camera for a tablet terminal, a camera for a mobile apparatus, a digital camera, and a camera for a medical device. Examples of the other applications include an automobile interior panel, an automobile lamp lens, an automobile inner lens, an automobile lens protective cover, and an automobile light guide.

As described above, the embodiments of the present invention have been described, but these are examples of the present invention, and various configurations other than the above can be adopted.

In addition, the present invention is not limited to the above described embodiment, and modifications, improvements, and the like within the range in which the object of the present invention can be achieved are included in the present invention. Examples

Hereinafter, the present embodiment will be described in detail with reference to Examples and the like. The present embodiment is not limited to the description of these examples.

First, a measurement method and an evaluation method performed in Examples, Comparative Examples, and Reference Examples will be described.

### [Measurement Method and Evaluation Method]

### (1) Melt flow rate (MFR) of cyclic olefin resin

The MFR of the cyclic olefin resin was measured at 260°C and a load of 2.16 kg based on ASTM D1238.

### (2) Glass Transition Temperature (Tg) of Cyclic Olefin Resin

The glass transition temperature (Tg) of the cyclic olefin resin was measured in a nitrogen atmosphere using a Discovery DSC-2500 manufactured by TA Instruments. The cyclic olefin resin was heated from room temperature (23°C) to 200°C at a heating rate of 10°C/min, and then held for 5 minutes. Next, the temperature was lowered to -20°C at a temperature lowering rate of 10°C/min, and then held for 5 minutes. Then, the glass transition temperature (Tg) of the cyclic olefin resin was obtained from the endothermic curve in a case where the temperature was raised to 200°C at a rate of temperature increase of 10°C/min.

### (3) Oxygen Content in Cyclic Olefin Resin Composition

The cyclic olefin resin composition in an amount of 20 g was placed into a 100 mL flask, the flask was deaerated at room temperature (23°C), sealed, and placed into a constant-temperature tank (manufactured by Advantech Co., Ltd., product name: VO-320) at 250°C for 1 hour to collect the generated gas in a PTFE bag. Next, the amount of oxygen in the bag made of PTFE was measured by a gas chromatograph (manufactured by Shimadzu Corporation, product name: Tracera), and the oxygen (O₂) contained in the cyclic olefin resin composition was calculated from the measured value. The obtained results are shown in Tables 1 and 2.

### (4) Light Transmittance at Wavelength of 450 nm

The pellet-shaped cyclic olefin resin composition was held in a vacuum dryer at 120°C under a reduced pressure (1.3 kPa) for 12 hours. Next, the cyclic olefin resin composition was supplied with the hopper of the injection molding machine into a cylinder. Then, the cylinder temperature was adjusted to nozzle/C3/C2/C1/below hopper = 260°C/270°C/260°C/250°C/70°C, and furthermore, the injection molding of the cyclic olefin resin composition was performed under the conditions of a molding cycle: 64 seconds/rotation, a back pressure: 3 MPa, and a rotation speed: 30 rpm to prepare a test piece having a length of 65 mm, a width of 35 mm, and a thickness of 3.0 mm.

As the injection molding machine, an injection molding machine (product name: SE30DUZ, screw diameter: 20 mmϕ) manufactured by Sumitomo Heavy Industries, Ltd. was used.

The light transmittance at a wavelength of 450 nm was measured on the obtained test piece by using an ultraviolet-visible-near infrared spectrophotometer UH4150 (manufactured by Hitachi High-Tech Science Corporation). The obtained results are shown in Tables 1 and 2.

### Reference Example 1

As the cyclic olefin resin (a1), a random copolymer of ethylene and tetra-cyclo [4.4.0.1^{2,5}.1^{7,10}]-3-dodecene (hereinafter, also referred to as "TD") obtained by using a ziegler catalyst (Tg: 135°C, the content ratio of the structural unit derived from TD in the copolymer: 36% by mol, MFR: 30 g/10 min) was used. The oxygen content and the light transmittance at a wavelength of 450 nm were measured using the pellet consisting of the cyclic olefin resin (a1) as a pellet-shaped cyclic olefin resin composition. The obtained results are shown in Table 1.

### Reference Example 2

Polymerization, decalcification, precipitation, and filtration were carried out according to [Manufacturing Example 1] described in paragraph [0125] of Pamphlet of International Publication No. WO2019/107363A to obtain a white powdery random copolymer of ethylene, tetracyclododecene, and benzonorbornadiene (hereinafter, also referred to as "BNBD") (Tg: 152°C, the content ratio of the structural unit derived from TD in the copolymer: 21% by mol, the content ratio of the structural unit derived from BNBD in the copolymer: 19% by mol, MFR: 17 g/10 min) as a cyclic olefin resin (a2). The oxygen content and the light transmittance at a wavelength of 450 nm were measured using the pellet consisting of the cyclic olefin resin (a2) as a pellet-shaped cyclic olefin resin composition. The obtained results are shown in Table 2.

### Example 1

### (Preparation of Collected Cyclic Olefin Resin Composition Formed of Collected Cyclic Olefin Resin (A1))

The sprue and the runner of an injection molded article formed of the cyclic olefin resin (A1) (a random copolymer of ethylene and TD, Tg: 135°C, the content ratio of the structural unit derived from TD in the copolymer: 36% by mol, MFR: 30 g/10 min) were pulverized with a crusher to prepare a collected cyclic olefin resin composition formed of the collected cyclic olefin resin (A1) with 3 mm squares. Tg of the collected cyclic olefin resin (A1) was 135°C, and MFR thereof was 30 g/10 min.

### (Heat Treatment Step (Step (1))

Next, the collected cyclic olefin resin composition formed of the collected cyclic olefin resin (A1) was held and heat treated in a vacuum dryer at 120°C for 12 hours under a reduced pressure (1.3 kPa). Next, the temperature of the resin composition in the vacuum dryer was adjusted to 100°C to obtain a recycled cyclic olefin resin composition.

The oxygen content of the obtained recycled cyclic olefin resin composition was measured. The oxygen content in the recycled cyclic olefin resin composition was 15 ppm.

### (Pelletizing step (step (2)))

Next, the obtained recycled cyclic olefin resin composition was melt-kneaded by using a twin-screw extruder (manufactured by The Japan Steel Works, LTD., model number: TEX44, L/D = 42) to obtain a recycled cyclic olefin resin composition in a pellet shape (cylindrical).

In Example 1, the temperature of the cylinder in the twin-screw extruder was set to die/C4/C3/C2/C1/below hopper = 250°C/250°C/250°C/250°C/240°C/70°C, the screw rotation speed was set to N = 150 [rpm], the supply rate of the recycled cyclic olefin resin composition was set to Q = 22 [kg/hr], and Q/N was set to 0.15.

The light transmittance of the obtained recycled cyclic olefin resin composition in the pellet shape at a wavelength of 450 nm was measured. The obtained results are shown in Table 1.

### Example 2

A recycled cyclic olefin resin composition was prepared in the same manner as in Example 1, except that the screw rotation speed was changed to N = 100 [rpm], and the supply rate of the recycled cyclic olefin resin composition was changed to Q = 20 [kg/hr] and Q/N = 0.20, and subjected to each evaluation. The obtained results are shown in Table 1.

### Example 3

A recycled cyclic olefin resin composition was prepared in the same manner as in Example 1, except that the screw rotation speed was changed to N = 50 [rpm], and the supply rate of the recycled cyclic olefin resin composition was changed to Q = 20 [kg/hr] and Q/N = 0.40, and subjected to each evaluation. The obtained results are shown in Table 1.

### Example 4

The collected cyclic olefin resin composition formed of the collected cyclic olefin resin (A1) was held and heat-treated in a dryer at 120°C for 12 hours under a nitrogen stream having a purity of 99.99%. Next, the temperature of the resin composition in the dryer was adjusted to 100°C to obtain a recycled cyclic olefin resin composition.

The oxygen content of the obtained recycled cyclic olefin resin composition was measured. The oxygen content in the recycled cyclic olefin resin composition was 20 ppm.

Next, a recycled cyclic olefin resin composition in a pellet shape was prepared in the same manner as in the step (2) of Example 1, and subjected to each evaluation. The obtained results are shown in Table 1.

### Example 5

The same procedure was carried out as in Example 4, except that the temperature of the resin composition in the dryer after the heat treatment was changed to 20°C. The obtained results are shown in Table 1.

### Example 6

The same procedure was carried out as in Example 5, except that the screw rotation speed was changed to 300 rpm. The obtained results are shown in Table 1.

### Example 7

The collected cyclic olefin resin composition formed of the collected cyclic olefin resin (A1) was held and heat-treated in a vacuum dryer at 120°C for 12 hours under a reduced pressure (1.3 kPa). Next, the temperature of the resin composition in the vacuum dryer was adjusted to 20°C to obtain a recycled cyclic olefin resin composition. The oxygen content of the obtained recycled cyclic olefin resin composition was measured. The oxygen content in the recycled cyclic olefin resin composition was 15 ppm.

Next, 0.1 parts by mass of pentaerythrimethyl-tetrakis(3-(3,5-di-tertiary butyl-4-hydroxyphenylpropionate)) as the phenol antioxidant (B1) was added to 100 parts by mass of the collected cyclic olefin resin composition formed of the collected cyclic olefin resin (A1), and uniformly mixed by using a tumbler mixer.

Next, a recycled cyclic olefin resin composition in a pellet shape was prepared in the same manner as in the step (2) of Example 1, and subjected to each evaluation. The obtained results are shown in Table 1.

### Example 8

A recycled cyclic olefin resin composition was obtained in the same manner as in the step (1) in Example 1, except that the temperature of the resin composition in the vacuum dryer was adjusted to 20°C.

Next, after the step (1), 0.03 parts by mass of ethylene bis stearic acid amide (Kao Corporation, Kaowax EB-FF) as a lubricant (C1) was added to 100 parts by mass of the collected cyclic olefin resin composition formed of the collected cyclic olefin resin (A1), and uniformly mixed by using a tumbler mixer.

Next, a recycled cyclic olefin resin composition in a pellet shape was prepared in the same manner as in the step (2) of Example 1, and subjected to each evaluation. The obtained results are shown in Table 1.

### Example 9

A recycled cyclic olefin resin composition was prepared in the same manner as in Example 1, except that the temperature of the resin composition in the dryer after the heat treatment was changed to 20°C, the screw rotation speed was changed to N = 60 [rpm], and the supply rate of the recycled cyclic olefin resin composition was changed to Q = 9 [kg/hr] and Q/N = 0.15, and subjected to each evaluation. The obtained results are shown in Table 1.

### Example 10

A recycled cyclic olefin resin composition was prepared in the same manner as in Example 1, except that the temperature of the resin composition in the dryer after the heat treatment was changed to 20°C, the screw rotation speed was changed to N = 60 [rpm], and the supply rate of the recycled cyclic olefin resin composition was changed to Q = 18 [kg/hr] and Q/N = 0.30, and subjected to each evaluation. The obtained results are shown in Table 1.

### Example 11

A recycled cyclic olefin resin composition was prepared in the same manner as in Example 1, except that the temperature of the resin composition in the dryer after the heat treatment was changed to 20°C, the screw rotation speed was changed to N = 60 [rpm], and the supply rate of the recycled cyclic olefin resin composition was changed to Q = 39 [kg/hr] and Q/N = 0.65, and subjected to each evaluation. The obtained results are shown in Table 1.

### Comparative Example 1

The same procedure was carried out as in Example 1, except that the heat treatment step (step (1)) was not carried out.

First, the oxygen content of the collected cyclic olefin resin composition formed of the collected cyclic olefin resin (A1) was measured. The oxygen content in the collected cyclic olefin resin composition was 200 ppm.

Next, a pellet-shaped cyclic olefin resin composition was prepared in the same manner as in the step (2) of Example 1, except that the screw rotation speed was changed to N = 450 [rpm], and the supply rate of the cyclic olefin resin composition was changed to Q = 27 [kg/hr] and Q/N = 0.06, and subjected to each evaluation. The obtained results are shown in Table 1.

### Comparative Example 2

The same procedure was carried out as in Comparative Example 1, except that the temperature of the cylinder in the injection molding machine was changed to nozzle/C3/C2/C1/below hopper = 260°C/260°C/240°C/230°C/70°C in the preparation of the test piece for measuring the light transmittance at a wavelength of 450 nm. The obtained results are shown in Table 1.

### Comparative Example 3

The same procedure was carried out as in Comparative Example 1, except for using, as a cyclic olefin resin composition, the mixture obtained in such a manner that 0.1 parts by mass of pentaerythrimethyl-tetrakis(3-(3,5-di-tertiary butyl-4-hydroxyphenylpropionate)) as the phenol antioxidant (B1) was added to 100 parts by mass of the collected cyclic olefin resin composition formed of the collected cyclic olefin resin (A1), and uniformly mixed by using a tumbler mixer. The obtained results are shown in Table 1.

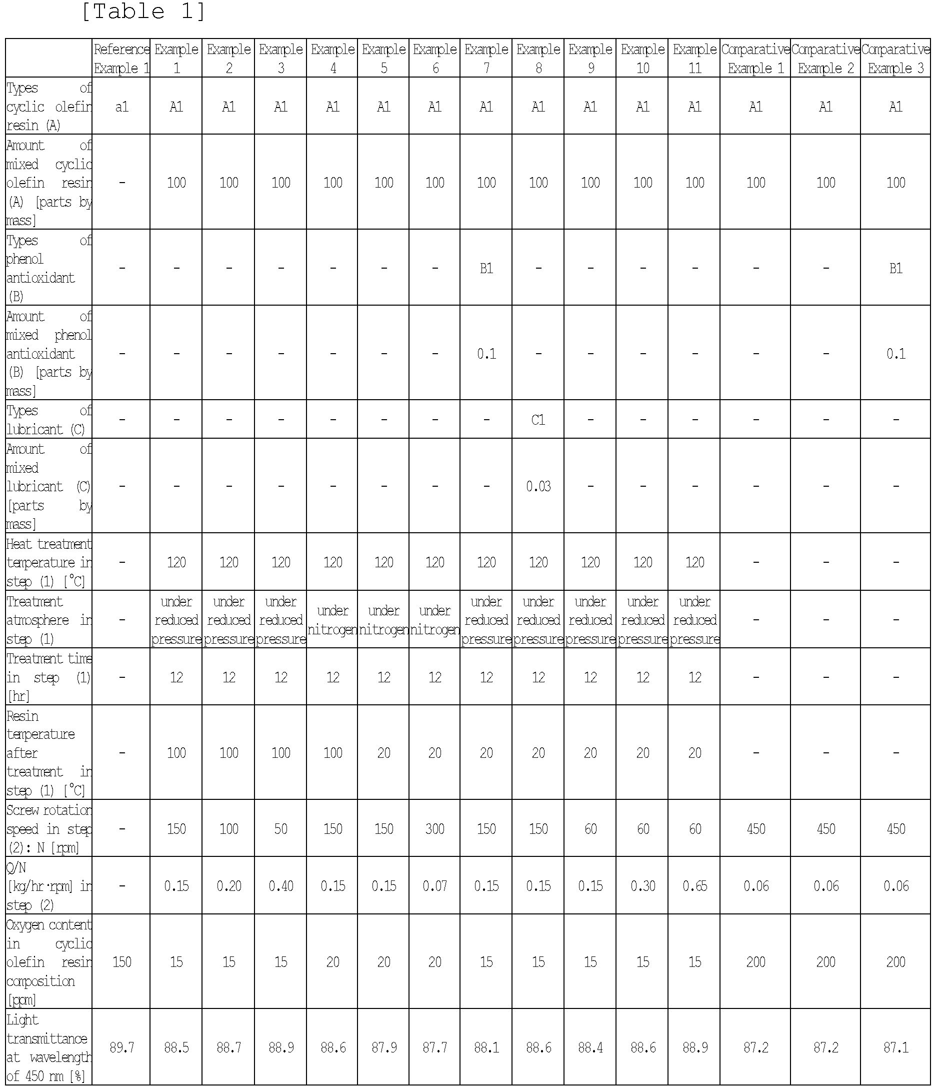

### Example 12

The sprue and the runner of an injection molded article formed of the cyclic olefin resin (A2) (a random copolymer of ethylene, TD, and BNBD, Tg: 152°C, the content ratio of the structural unit derived from TD in the copolymer: 21% by mol, the content ratio of the structural unit derived from BNBD: 19% by mol, MFR: 17 g/10 min) were pulverized with a crusher to prepare a collected cyclic olefin resin composition formed of the collected cyclic olefin resin (A2) with 3 mm squares. Tg of the collected cyclic olefin resin (A2) was 152°C, and MFR thereof was 17 g/10 min.

Next, a recycled cyclic olefin resin composition was produced in the same manner as in Example 1, except that the collected cyclic olefin resin composition formed of the collected cyclic olefin resin (A1) was changed to the collected cyclic olefin resin composition formed of the collected cyclic olefin resin (A2), and subjected to each evaluation. The obtained results are shown in Table 2.

### Comparative Example 4

The same procedure was carried out as in Example 12, except that the heat treatment step (step (1)) was not carried out.

First, the oxygen content of the collected cyclic olefin resin composition formed of the collected cyclic olefin resin (A2) was measured. The oxygen content in the collected cyclic olefin resin composition was 200 ppm.

Next, a pellet-shaped cyclic olefin resin composition was prepared in the same manner as in the step (2) of Example 1, except that the screw rotation speed was changed to N = 450 [rpm], and the supply rate of the cyclic olefin resin composition was changed to Q = 27 [kg/hr] and Q/N = 0.06, and subjected to each evaluation. The obtained results are shown in Table 2.

**[Table 2]**

| | Reference Example 1 | Example 12 | Comparative Example 4 |
|---|---|---|---|
| Types of cyclic olefin resin (A) | a2 | A2 | A2 |
| Amount of mixed cyclic olefin resin (A) [parts by mass] | - | 100 | 100 |
| Heat treatment temperature in step (1) [°C] | - | 120 | - |
| Treatment atmosphere in step (1) | - | under reduced pressure | - |
| Treatment time in step (1) [hr] | - | 12 | - |
| Resin temperature after treatment in step (1) [°C] | - | 20 | - |
| Screw rotation speed in step (2): N [rpm] | - | 150 | 450 |
| Q/N [kg/hr·rpm] in step (2) | - | 0.15 | 0.06 |
| Oxygen content in cyclic olefin resin composition [ppm] | 150 | 15 | 200 |
| Light transmittance at wavelength of 450 nm [%] | 89.7 | 83.9 | 82.7 |

This application claims priority based on Japanese Patent Application No. 2022-051883 filed on March 28, 2022, the entire disclosure of which is incorporated herein.

## Claims

1. A recycled cyclic olefin resin composition comprising a collected cyclic olefin resin (A),
wherein a ratio (w₂/w₁) of a mass (w₂) of oxygen (O₂) contained in the recycled cyclic olefin resin composition to a total mass (w₁) of the recycled cyclic olefin resin composition is 100 ppm or less.

2. The recycled cyclic olefin resin composition according to Claim 1,
wherein w₂/w₁ is 1 ppm or more.

3. The recycled cyclic olefin resin composition according to Claim 1 or 2,
wherein the collected cyclic olefin resin (A) contains a cyclic olefin copolymer (P1) that contains
at least one olefin-derived repeating unit (a) represented by Formula (I) and
at least one cyclic olefin monomer-derived repeating unit (b) selected from the group consisting of a repeating unit (AA) represented by Formula (II), a repeating unit (AB) represented by Formula (III), and a repeating unit (AC) represented by Formula (IV), 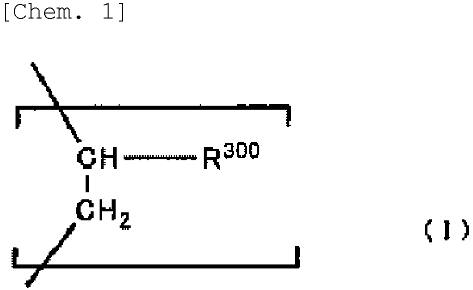 in Formula (I), R³⁰⁰ represents a hydrogen atom or a linear or branched hydrocarbon group having 1 to 29 carbon atoms; 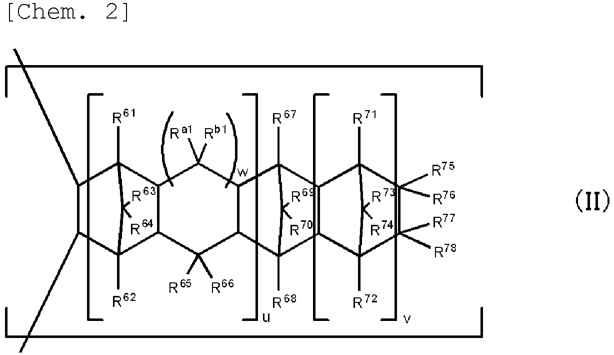 in Formula (II), u is 0 or 1, v is 0 or a positive integer, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring; 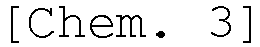 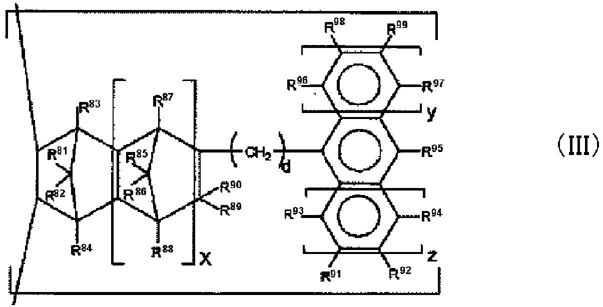 in Formula (III), x and d are each 0 or an integer of 1 or more, y and z are each 0, 1, or 2, R⁸¹ to R⁹⁹ may be the same as or different from each other and are each a hydrogen atom, a halogen atom, an aliphatic hydrocarbon group, which is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be directly bonded to each other or bonded to each other through an alkylene group having 1 to 3 carbon atoms, and in a case of y = z = 0, R⁹⁵ and R⁹² or R⁹⁵ and R⁹⁹ may be bonded to each other to form a monocyclic or polycyclic aromatic ring; 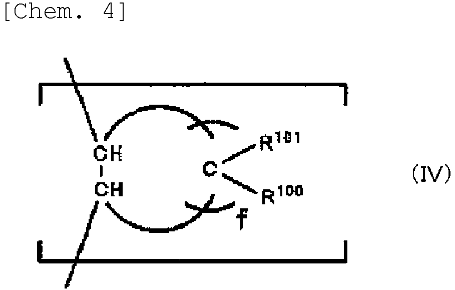 in Formula (IV), R¹⁰⁰ and R¹⁰¹ may be the same as or different from each other and are each a hydrogen atom or a hydrocarbon group having 1 to 5 carbon atoms, and f is an integer of 1 ≤ f ≤ 18.

4. The recycled cyclic olefin resin composition according to Claim 1 or 2,
wherein the collected cyclic olefin resin (A) contains a cyclic olefin copolymer (P2) that contains a repeating unit (AA) represented by Formula (II) and a constituent unit (C) derived from a cyclic olefin having an aromatic ring,
the repeating unit (AA) contains no aromatic ring, and
the cyclic olefin having an aromatic ring contains at least one selected from the group consisting of a compound represented by Formula (C-1), a compound represented by Formula (C-2), and a compound represented by Formula (C-3), 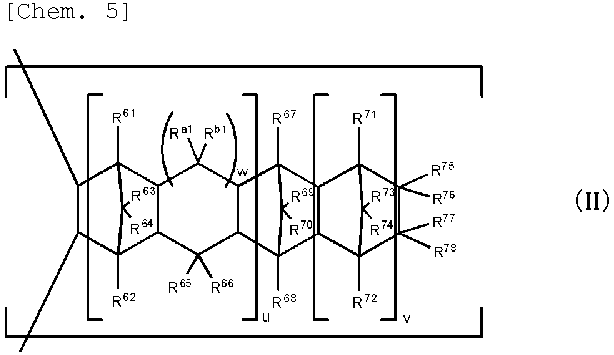 in Formula (II), u is 0 or 1, v is 0 or a positive integer, w is 0 or 1, R⁶¹ to R⁷⁸ and R^{a1} and R^{b1} may be the same as or different from each other and are each a hydrogen atom, a halogen atom, an alkyl group having 1 to 20 carbon atoms, a halogenated alkyl group having 1 to 20 carbon atoms, or a cycloalkyl group having 3 to 15 carbon atoms, and R⁷⁵ to R⁷⁸ may be bonded to each other to form a monocyclic ring or a polycyclic ring; 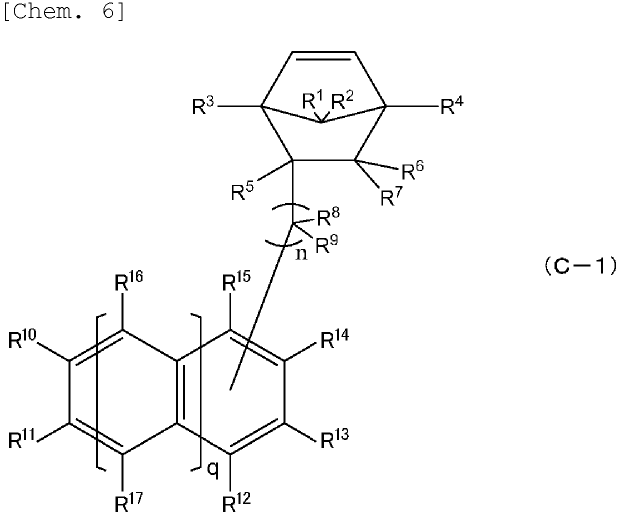 in Formula (C-1), n and q are each independently 0, 1, or 2, R¹ to R¹⁷ are each independently a hydrogen atom, a halogen atom other than a fluorine atom, or a hydrocarbon group having 1 to 20 carbon atoms, which may be substituted with a halogen atom other than a fluorine atom, one of R¹⁰ to R¹⁷ is a bonding site, in a case of q = 0, R¹⁰ and R¹¹, R¹¹ and R¹², R¹² and R¹³, R¹³ and R¹⁴, R¹⁴ and R¹⁵, or R¹⁵ and R¹⁰ may be bonded to each other to form a monocyclic ring or a polycyclic ring, in a case of q = 1 or 2, R¹⁰ and R¹¹, R¹¹ and R¹⁷, R¹⁷ and R¹⁷, R¹⁷ and R¹², R¹² and R¹³, R¹³ and R¹⁴, R¹⁴ and R¹⁵, R¹⁵ and R¹⁶, R¹⁶ and R¹⁶, or R¹⁶ and R¹⁰ may be bonded to each other to form a monocyclic ring or a polycyclic ring, the monocyclic ring or the polycyclic ring may have a double bond, and the monocyclic ring or the polycyclic ring may be an aromatic ring; 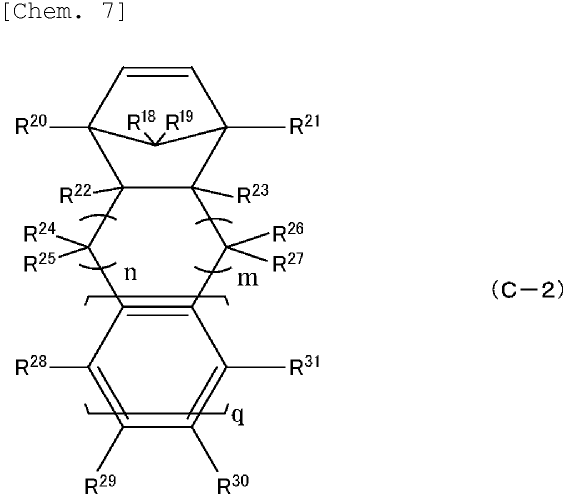 in Formula (C-2), n and m are each independently 0, 1, or 2, q is 1, 2, or 3, R¹⁸ to R³¹ are each independently a hydrogen atom, a halogen atom other than a fluorine atom, or a hydrocarbon group having 1 to 20 carbon atoms, which may be substituted with a halogen atom other than a fluorine atom, in a case of q = 1, R²⁸ and R²⁹, R²⁹ and R³⁰, or R³⁰ and R³¹ may be bonded to each other to form a monocyclic ring or a polycyclic ring, in a case of q = 2 or 3, R²⁸ and R²⁸, R²⁸ and R²⁹, R²⁹ and R³⁰, R³⁰ and R³¹, or R³¹ or R³¹ may be bonded to each other to form a monocyclic ring or a polycyclic ring, the monocyclic ring or the polycyclic ring may have a double bond, and the monocyclic ring or the polycyclic ring may be an aromatic ring; 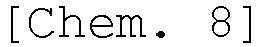 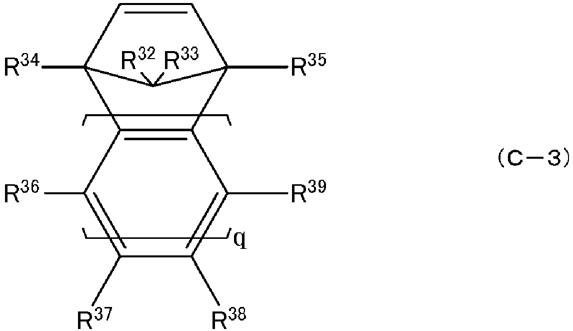 in Formula (C-3), q is 1, 2, or 3, R³² to R³⁹ are each independently a hydrogen atom, a halogen atom other than a fluorine atom, or a hydrocarbon group having 1 to 20 carbon atoms, which may be substituted with a halogen atom other than a fluorine atom, in a case of q = 1, R³⁶ and R³⁷, R³⁷ and R³⁸, or R³⁸ and R³⁹ may be bonded to each other to form a monocyclic ring or a polycyclic ring, in a case of q = 2 or 3, R³⁶ and R³⁶, R³⁶ and R³⁷, R³⁷ and R³⁸, R³⁸ and R³⁹, or R³⁹ and R³⁹ may be bonded to each other to form a monocyclic ring or a polycyclic ring, the monocyclic ring or the polycyclic ring may have a double bond, and the monocyclic ring or the polycyclic ring may be an aromatic ring.

5. The recycled cyclic olefin resin composition according to any one of Claims 1 to 4, further comprising a lubricant (C).

6. The recycled cyclic olefin resin composition according to any one of Claims 1 to 5, wherein the recycled cyclic olefin resin composition is pellet-shaped.

7. A molded body comprising the recycled cyclic olefin resin composition according to any one of Claims 1 to 6.

8. An optical component comprising the molded body according to Claim 7.

9. A method for producing a recycled cyclic olefin resin composition, the method comprising a step (1) of subjecting a collected cyclic olefin resin composition containing a collected cyclic olefin resin (A) to a heat treatment at a temperature of (Tg - 50°C) or higher and (Tg - 1°C) or lower in an inert atmosphere or under a reduced pressure, a glass transition temperature of the collected cyclic olefin resin (A) being denoted by Tg.

10. The method for producing a recycled cyclic olefin resin composition according to Claim 9, wherein a time for the heat treatment in the step (1) is 4 hours or longer and 240 hours or shorter.

11. The method for producing a recycled cyclic olefin resin composition according to Claim 9 or 10, the method further comprising a step (2) of kneading the collected cyclic olefin resin composition heat-treated in the step (1) with an extruder to be made into pellets.

12. The method for producing a recycled cyclic olefin resin composition according to Claim 11, wherein in the step (2), a screw rotation speed during the kneading with the extruder is 20 rpm or more and 420 rpm or less.

13. The method for producing a recycled cyclic olefin resin composition according to Claim 11 or 12, wherein after the step (1) or in the step (2), at least one phenol antioxidant (B) is added in an amount of 0.01 parts by mass or more and 2.0 parts by mass or less with respect to 100 parts by mass of the collected cyclic olefin resin composition.

14. The method for producing a recycled cyclic olefin resin composition according to any one of Claims 11 to 13, wherein in the step (2), Q/N, where a screw rotation speed during the kneading with the extruder is denoted by N [rpm] and a supply rate of the recycled cyclic olefin resin composition is denoted by Q [kg/hr], is 0.10 or more during the kneading.
